(19) Europäisches Patentamt
European Patent Office
Office européen des brevets

(11) **EP 4 009 197 A1**

(12) # EUROPEAN PATENT APPLICATION


(43) Date of publication:
**08.06.2022 Bulletin 2022/23**

(21) Application number: **21212554.6**

(22) Date of filing: **06.12.2021**

(51) International Patent Classification (IPC):
***G06F 16/9035*** *(2019.01)* ***G06F 16/9038*** *(2019.01)*

(52) Cooperative Patent Classification (CPC):
**G06F 16/9035; G06F 16/9038**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.12.2020 US 202063121671 P**



(71) Applicant: **Indiggo Associates LLC**
**Bethesda, MD 20814 (US)**

(72) Inventors:
- **PERINCHERRY, Vijay**
  **Maryland, 20854 (US)**
- **GELBART, Janine**
  **Maryland, 20814 (US)**
- **INZELSTEIN, Marc**
  **Maryland, 20852 (US)**

(74) Representative: **Cooley (UK) LLP**
**22 Bishopsgate**
**London EC2N 4BQ (GB)**


(54) **ADAPTIVE METHODS FOR GENERATING MULTIDIMENSIONAL VECTOR REPRESENTATIONS OF CORE PURPOSE, INCLUDING CLUSTERED DATA FROM MULTIPLE NETWORKED DATABASE SYSTEMS**


(57) A processor-implemented method of assessing, via a processor, a purpose connectivity for a user within an organization includes sequentially displaying a set of prompts to the user, via an interface, and based on an engagement schema. A second prompt and each subsequent prompt from the set of prompts being based on a response, from a set of responses, received in response to a preceding prompt from the set of prompts. The assessing also includes calculating the purpose connectivity based on the plurality of responses. In response to detecting that a value of the purpose connectivity is below a predefined threshold, a signal is sent to cause a remedial action.


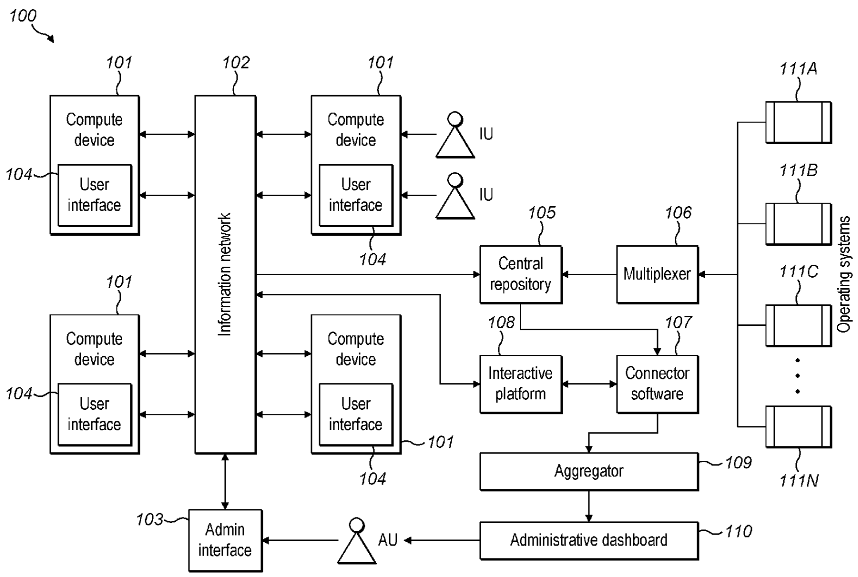


FIG. 1

EP 4 009 197 A1

Processed by Luminess, 75001 PARIS (FR)

## Description

*Cross-Reference to Related Applications*

This application claims priority to, and the benefit of, U.S. Provisional Patent Application Number 63/121,671, filed December 4, 2020 and titled "Adaptive Methods for Generating Multidimensional Vector Representations of Core Purpose, Including Clustered Data from Multiple Networked Database Systems," the entire contents of which are hereby incorporated by reference. This application is also related to U.S. Patent Number 10,255,700, issued April 9, 2019 and titled "Apparatus and Methods for Generating Data Structures to Represent and Compress Data Profiles," the entire contents of which are hereby incorporated by reference.

*Field of Disclosure*

One or more embodiments described herein relate generally to apparatuses and methods for the representation and adjustment of organization sentiment based on multiplexed networked resources and interactive user input.

*Background*

Individual and organizational purpose are concepts that have traditionally been described in qualitative terms, rather than in quantitative terms. Qualitative descriptions, however, cannot quantify the information upon which they are based, nor can they quantify the levels of uncertainty associated with such information.

***Summary***

In some embodiments, a processor-implemented method includes receiving input, via a processor, from each user from a plurality of users (e.g., via associated graphical user interfaces (GUIs) of one or more associated compute devices). A user purpose profile is defined for each user from the plurality of users, and a connection is defined between a purpose of each user from the plurality of users and an organizational purpose of an associated organization. The connection definition is performed by comparing, via the processor and for each user from the plurality of users, (i) activity data associated with that user, and (ii) the user purpose profile associated with that user. An individual purpose connection metric is tracked for each user from the plurality of users, and/or an aggregated purpose connection metric (i.e., an aggregation of multiple purpose connection metrics) is tracked for the plurality of users, via the processor and based on the comparing. The connection definition also includes repeatedly causing a signal representing the individual purpose connection metric for each user from the plurality of users and/or the aggregated purpose connection metrics to be sent to a display of a compute device (e.g., for presentation to one or more users).

In some embodiments, a method includes connecting, via a processor and for an organization having an organization strategy and an organization purpose, the organization strategy to the organization purpose by calculating a first purpose connection metric based on activity data associated with the organization. The method also includes connecting, via the processor and for a business unit of the organization and having a business unit strategy, the business unit strategy to the organizations purpose by calculating a second purpose connection metric based on activity data associated with the organization. The method also includes connecting, via the processor and for an individual employed at the organization and having an individual purpose, an individual role, and an individual work, the individual purpose to the individual role and the individual work by calculating a third purpose connection metric based on activity data associated with the individual. The method also includes connecting, via the processor, the individual role and the individual work to the organization strategy by calculating a fourth purpose connection metric based on activity data associated with the individual and activity data associated with the organization. The method also includes connecting, via the processor, the individual role and the individual work to the organization purpose by calculating a fifth purpose connection metric based on activity data associated with the individual and activity data associated with the organization. The method also includes causing display, via an interactive graphical user interface (GUI) of a compute device , graphical depictions of each of the first purpose connection metric, the second purpose connection metric, the third purpose connection metric, the fourth purpose connection metric, and the fifth purpose connection metric.

In some embodiments, a non-transitory, processor-readable medium stores instructions that, when executed by a processor, cause the processor to receive input, via a telecommunications network of an organization and from each user from a plurality of users within the organization. The non-transitory, processor-readable medium also stores instructions that, when executed by a processor, cause the processor to define, based on the input, a user purpose profile for each user from the plurality of users. The non-transitory, processor-readable medium also stores instructions that, when executed by a processor, cause the processor to define an association, for each user from the plurality of users, between a purpose parameter defined by that user and a predefined purpose of the organization, by: (1) comparing, for each user from the plurality of users, (i) activity data associated with that user, and (ii) the user purpose profile associated with that user; (2) tracking, based on the comparing, at least one of: an individual purpose connection metric for each user from the plurality of users, or an aggregated purpose connection metric for the plurality of users; and (3) repeatedly causing a signal representing at least one of the individual purpose connection metric for each user from the plurality of users or the aggregated purpose connection metric to be sent to a display of a compute device.

In some embodiments, a method includes assessing, via a processor, a purpose connectivity for a user within an organization. The assessing includes sequentially displaying a set of prompts to the user, via a user interface, and based on an engagement schema. A second prompt and each subsequent prompt from the set of prompts being based on a response, from a set of responses, received in response to a preceding prompt from the set of prompts. The assessing also includes calculating the purpose connectivity based on the plurality of responses. In response to detecting that a value of the purpose connectivity is below a predefined threshold, a signal is sent to cause a remedial action.

In some embodiments, a method includes sending, from a processor and via a communications network, a signal to cause sequential display of a plurality of interactive prompts to a user. At least one signal representing a plurality of responses is received, at the processor, via the communications network, and in response to the user interacting with the plurality of interactive prompts. An adjusted weight is calculated, for a link between the at least one response from the plurality of responses and an associated interactive prompt from the plurality of interactive prompts. At least one dimension is identified based on the at least one response, and a classification for the at least one response is determined based on the at least one dimension. A multidimensional profile of the user is computed based on at least one of the adjusted weight, the at least one dimension, and the classification, and a representation of the multidimensional profile of the user is displayed via a user interface within the communications network. The multidimensional profile can represent a compressed plurality of data clusters generated by accessing multiple networked database systems.

In some embodiments, a processor-implemented method includes iteratively assessing, via a processor, a characterization parameter for a user within an organization. The iterative assessment includes causing sequential display of a plurality of prompts to the user, via a user interface, based on an engagement schema, a second prompt and each subsequent prompt from the plurality of prompts being based on a response, from a plurality of responses, received in response to a preceding prompt from the plurality of prompts. The iterative assessment also includes calculating the characterization parameter based on the plurality of responses, and causing display of a representation of the characterization parameter via the user interface.

***Brief Description of the Drawings***

FIG. 1 is a schematic of a system to measure core purpose, according to an embodiment.

FIG. 2 shows an engagement schema for soliciting core purpose, according to an embodiment.

FIG. 3 is a directional graph representation of relationships between prompts and responses, according to an embodiment.

FIG. 4 is a flow chart illustrating a method for dynamically adjusting the strength of links within a directional graph, according to an embodiment.

FIG. 5 illustrates a system block diagram of a compute device configured to perform data compression, according to an embodiment.

FIG. 6 is a flow diagram illustrating a method for data compression, according to an embodiment.

FIG. 7 is a flow diagram illustrating a method of inclination value range, or "mindset leaning" distribution, computation, according to an embodiment.

FIG. 8 is a flow chart illustrating a computer implemented method for soliciting user responses and computing a multidimensional profile of the user, according to an embodiment.

FIG. 9 is a flow chart illustrating a computer implemented method for soliciting user responses and calculating a characterization parameter, according to an embodiment.

FIG. 10 is a flow chart illustrating a computer implemented method for quantifying purpose connectivity and causing remedial actions to be performed, according to an embodiment.

FIG. 11 is a diagram of an example neural network, suitable for performing purpose calibrations of the present disclosure, according to an embodiment.

FIG. 12 is a flow diagram illustrating a method for tracking metrics connectivity, according to an embodiment.

FIGS. 13 through 29 show example user-navigable graphical user interface (GUI) screens, according to various embodiments.

### *Detailed Description*

Establishing a strong organizational culture and a shared core organizational purpose ("core purpose") among members of the organization have been shown to contribute to increased engagement, motivation, productivity, efficiency, effectiveness, drive and performance, and better outcomes. Meaningful progress is often driven by purposeful organized efforts of individuals working intentionally toward achieving common objectives. The effectiveness of any individual or collective effort can be significantly influenced by the underlying reasons for (i.e., the core purpose of) the effort, and by the degree to which each individual person or team member understands and observes the connection between their actions and those underlying reasons. Organizational leaders have frequently sought ways of integrating core purpose into their organizational operations, and to ensure and enhance an awareness of, and connection to, purpose across the organization.

Nevertheless, core purpose has remained difficult to measure or quantify within a framework that can be leveraged. Known approaches to assessing core purpose or alignment between personal action and collective action have generally relied on interpersonal communications and/or survey instruments . Survey instruments are often unreliable due to several factors including:

- Preconceived notions about potential misuse of the responses;
- Subjective interpretations of survey questions by the respondents;
- The presence of extraneous factors that impact the respondent’s state of mind while responding to the survey;
- The fact that assessments taken at a fixed point in time may be distorted;
- A lack of connection to the greater business context;
- Artificial separation between core purpose and the actual work being done; and
- Lack of insight into individual purpose as it relates to organizational purpose.

Without a reliable, objective assessment of core purpose, it can be difficult for an organization to:

1. Study the effectiveness of investments in initiatives aimed at improving core purpose among team members;

2. Obtain an accurate reading of the status of core purpose within the organization; and/or

3. Improve the status of core purpose within the organization.

As business leadership paradigms continue to shift from shareholder capitalism to stakeholder capitalism, core purpose is expected to play an increasingly large role, and techniques to quantify core purpose are increasingly desirable.

According to one or more embodiments of the present disclosure, a system and method are presented for measuring and tracking one or more characterization parameters associated with an organization, and for ensuring that one or more tasks being performed within a networked computer system of the organization are compliant with, or sufficiently aligned with, the one or more characterization parameters. More specifically, in some embodiments, a system and method are presented for measuring core purpose and/or for calibrating the level of connection that individuals and collections of individuals within an organization have to the core purpose. As used herein, a characterization parameter can refer to an organization’s core purpose (e.g., a purpose or mission associated with an organization, such as a goal, objective, or desired outcome associated with the individuals of the organization, collectively), an individual user’s core purpose (e.g., a purpose or mission associated with an individual person, who may be a member of an organization, such as a goal, objective, or desired outcome associated with that one individual), a connectivity (or quantified connection strength) between individual core purpose(s) and discrete tasks, a connectivity between core purpose(s) of the organization and discrete tasks, a connectivity between individual core purpose(s) and one or more strategies, connectivity between core purpose(s) of the organization and one or more strategies, an organizational goal or benchmark (i.e., a goal or benchmark associated with an organization), or an individual goal or benchmark (i.e., a goal or benchmark associated with an individual person, who may be a member of an organization). The organization’s core purpose(s), individual user’s core purpose(s), connectivities, and goals or benchmarks discussed above can, individually or collectively, refer to an "organizational sentiment" in that they quantify perceptions of organizational purpose and its implementation. Systems and methods set forth herein facilitate the measurement, integration, and articulation of one or more characterization parameters (such as core purpose) via a networked computer system of an organization, for example using an adaptive spanning tree algorithm.

In some embodiments, a system and a method are provided for reliably and objectively measuring individual and collective core purpose, and for activating the individual and collective awareness of and alignment with core purpose. The objective measurements can be based, for example, on real-time actions, behaviors, and/or choices of individuals (e.g., team members), and can be stored and presented (e.g., via a graphical user interface (GUI)) as a single dimensional measurement or a multi-dimensional measurement.

The measurement of an individual's core purpose can be based on representations (e.g., linguistic, numeric, and/or algorithmic representations) of one or more of:

- A degree of connection between the organization's core purpose and the organization's strategy;
- A degree of clarity of the individual's own purpose in his/her job;
- A degree of connection between the individual's personal core purpose and the core purpose of the organization;
- A degree of connection between an individual's "drivers" (e.g., personal goals, objectives, priorities, and/or aspirations) and the individual's personal core purpose;
- A degree of connection between the individual's personal core purpose (i.e., the reasons underlying the individual's personal goals, objectives, priorities and aspirations) and the organization's drivers (e.g., strategy goals, objectives, priorities, objectives etc.);
- A degree of connection between the individual's drivers (e.g., personal goals, objectives, priorities and aspirations) and the organization's core purpose;
- A degree of connection between the individual's day-to-day interactions (e.g., events, meetings, etc.) and the individual's core purpose;
- A degree of connection between the individual's day-to-day interactions (e.g., events, meetings, etc.) and the organization's core purpose;
- Alignment among team members (e.g., supervisors and/or employees) between a core purpose of the team and the core purpose of the organization;
- A degree of connection between one or more meeting agendas and the individual's core purpose;
- A degree of connection between one or more meeting agendas and the core purpose of the organization; and
- A degree of connection between an overall use of time of the individual or of the organization, and the core purpose of the individual or of the organization.

In some embodiments, a system includes an interactive platform, hosted on a networked computer system of an organization, and via which each individual team member can:

- Learn about the core purpose of the organization;
- Identify and articulate / describe their individual core purpose;
- Identify and articulate / describe the organization's core purpose;
- Articulate / describe the perceived connection between the individual's core purpose and the organization's core purpose;
- Connect their individual work with their individual purpose (e.g., by modifying one or more tasks);
- Connect their individual work with the organization's core purpose (e.g., by modifying one or more tasks);
- Maintain an ongoing awareness, over time, of a degree of alignment between the individual's core purpose and the organization's core purpose;
- Maintain an ongoing awareness, over time, of a degree of alignment between the work being done by the individual and the individual's core purpose and/or the organization's core purpose;
- Connect their individual core purpose to the core purpose, goals, objectives, strategies and priorities of the team;
- Allocate investments of resources (including, but not limited to: time, money, materials, and attention) to the individual's core purpose;
- Allocate investments of resources (including, but not limited to: time, money, materials, and attention) to the team's core purpose; and/or
- Allocate investments of resources (including. but not limited to: time, money, materials, and attention) to the organization's core purpose.

In some embodiments, a system includes an interactive platform, hosted on a networked computer system of an organization, and via which organizational leaders can:

- Implement a methodology for integrating the organization's core purpose into one or more workflows;
- Communicate the organization's core purpose to the individual members of the organization;
- Provide reminders to the individual members of the organization about the organization's core purpose;
- Increase the prominence and incidence of representations of the organization's core purpose within the organization's systems;
- Integrate the organization's core purpose into strategy formulation and/or strategy execution;
- Integrate the organization's core purpose into events, interactions, meetings, meeting agendas, outcomes, decisions and plans; and

- Facilitate the individual tasks enumerated above.

FIG. 1 is a schematic of a computer-implemented system 100 for measuring core purpose, according to an embodiment. The computer-implemented system 100 includes a plurality of compute devices 101, each of which can include a processor (not shown) and a memory (not shown) that stores processor-executable instructions. Each compute device 101 from the plurality of compute devices includes a user interface 104 (e.g., a GUI) with which a user from a plurality of users (e.g., a team member from a plurality of team members within an organization) can interact, during operation. In some implementations, each compute device 101 is associated with a particular individual user "IU." Each user can interact with the user interfaces 104 of the compute devices 101 to provide input data that includes, but is not limited to, one or more of the following: the user's individual core purpose; the user's individual drivers, goals, objectives, priorities and/or strategies; a perceived connection between the user's individual drivers, goals, objectives, priorities and/or strategies and the user's individual core purpose; a perceived connection between the user's individual core purpose and the organization's core purpose; and a perceived connection between the user's individual drivers, goals, objectives, priorities and/or strategies, and an organizational strategy. Any of the foregoing input data (e.g., the user's individual core purpose) may be stored in a memory (not shown) of the system 100 and designated as "private" (such that other users cannot access it) until the user modifies a permissions setting for that input data.

The input data can be compiled using a dynamic engagement schema (also referred to herein as a "conversational schema"). The dynamic engagement schema can be structured, for example, as an adaptive spanning tree that includes prompts and responses, as shown and discussed below with reference to FIG. 2. The prompts and responses can be represented, for example, as a directional graph, and example of which is shown in FIG. 3. Prompts can be linked to specific responses and/or response categories through binary links. A finite (e.g., predefined) number of response categories may be linked to each response. Each prompt can be presented to one or more of the individual users IU, to elicit responses from the individual users IU, and those responses can be classified into one or more response categories from a finite (e.g., predefined) set of response categories (as also shown in FIG. 3). Each response category can also be linked to, or associated with, the set of prompts based on a strength of connectivity, which may be dynamically adjusted. The response category classification(s) can then be used to identify a next prompt or a next set of next prompts for presentation to the one or more of the individual users IU. In other embodiments, a classification step is not performed, and rather a received response is mapped directly to a predefined next prompt or set of prompts.

Prompts can be selected according to an algorithm, an example of which is as follows: If, at a first step "T," the response category was "I," then a prompt at step T+1 ("prompt[T+1]") is identified as: prompt[T+1] = prompt(J) such that an associated strength of connectivity "strength(I,J)" is maximized over all J. The strength(I,J) can be dynamically adjusted according to the following formulation: strength(I,J) = strength(I,J) + (1-strength(I,J)) x a/N, where N represents a total number of users that engage with the conversational schema, and a value "a" represents whether the user responded to the prompt at all (*a* = +1 if the user responded, and *a* = -1 if the user did not respond)

Returning to FIG. 1, an information network 102 facilitates communication among the individual users IU, and the sharing of individual core purposes of the users and the organization's core purpose. The computer-implemented system 100 also includes an administrative interface 103 through which one or more administrative users "AU" (e.g., the organization's leaders) can specify, input, and/or transmit a variety of data, such as, for example:

- The organization's core purpose;
- The organization's strategy, goals, objectives and/or priorities; and
- Connections between the organization's core purpose and its strategy, goals, objectives and priorities.

Although shown and described as distinct components in FIG. 1, in other embodiments, one or more of the connector software, the central repository 105, the aggregator 109, the administrative dashboard 110, and the administrative interface 103 can be co-located within a common compute device, for example as part of the interactive platform 108. Alternatively or in addition, the administrative interface 103 can transmit data for dissemination to any component of FIG. 1 via the information network 102 and/or via direct communication with one or more such components (e.g., the interactive platform 108, the connector software 107, etc.)

The computer-implemented system 100 also includes interfaces 104 (each of which, in some implementations, may be combined with or part of a compute device 101) through which each individual users IU can view and specify a level of connection between their individual core purposes and the organization's purpose, goals, objectives, outcomes and priorities. The computer-implemented system 100 also includes a central repository 105 (e.g., a processor-readable memory) that stores information supplied (i.e., input within the system 100) by users and administrative users on goals, objectives, outcomes, priorities and core purposes.

The computer-implemented system 100 also includes a multiplexer 106 that is communicably linked to multiple operational systems 111A through 111N (also referred to herein as "discrete network resources") including, but not limited to: electronic calendars, correspondence systems (e.g., email servers, messaging software, etc.), project management systems, and human resources systems. Alternatively or in addition, one or more of the compute devices 101 can include any or all of the discrete network resources. The multiplexer 106 is configured to extract information (e.g., asynchronously) from the discrete network resources and, optionally, to cause storage of the extracted information (e.g., in the central repository 105) and/or transmission of a signal representing the extracted information to cause display of the extracted information via one or more of the interfaces 104.

The computer-implemented system 100 also includes connector software 107 stored in a memory (not shown) and/or executed on a processor (not shown). The connector software 107 includes instructions to perform assessments of connections between individual resource units (e.g., investments of resources such as time, money, computing resources, etc.), and associated individual core purposes and/or the organization's core purpose(s). Individual users UI can interact with the assessments performed by connector software 107 via an interactive platform 108 (implemented in software and/or hardware of a compute device of the system 100 and configured to access the discrete network resources, data associated with the individual users UI, etc.), and can provide feedback via the interactive platform 108 to the connector software 107 for continual enhancement of the assessment process.

The computer-implemented system 100 also includes an aggregator 109 (implemented in software and/or hardware) that aggregates assessments of links between individual resources, individual core purposes, the organization's core purpose(s), and collective goals, objectives, outcomes and priorities to generate measurements, such as the following measurements, for each individual user IU:

**A(IU)** = Number of the individual's resource units that are linked to the individual's core purpose(s) divided by the individual's overall / total number of invested resource units; and
**B(IU)** = Number of the individual's resource units that are linked to the organization's goals divided by the individual's overall / total number of invested resource units, where the individual's aggregated purpose is generated as a vectors **{A(IU),B(IU)}.** Aggregator 109 also aggregates the measurements across all individual users I to generate a vector C that represents **{D,E,P},** where:

**D** represents a mean value of **A(IU)** over all individual users **IU,**
**E** represents a variance of **B(IU)** over all individual users **IU,** and
**P** represents the individual users **IU** as a percentage of available participants (=100 * individual users **IU**/ Total number of available participants).

The foregoing metrics measure (or quantify) an overall level of purpose experienced by the users IU both individually and collectively within the organization. More specifically:

- **A(IU)** measures an alignment between the individuals' resources and the individuals' core purpose(s);
- **B(IU)** measures an alignment between the individuals' resources and the core purpose(s) of the organization;
- **D/P** represents a degree to which overall connections to core purpose(s) are experienced within the organization;
- **E/P** represents a degree to which core purpose(s) are integrated into the strategy and execution of the organization; and
- **P** represents the proportion of available participants within the organization that interact with the system 100.

The computer-implemented system 100 also includes an administrative dashboard 110 via which administrative users AU can review the aggregated assessments generated by the aggregator 109.

In some embodiments, the computer-implemented system 100 (e.g., via one or more of the compute devices 101, the interactive platform 108, the connector software 107 and/or the aggregator 109) is configured to perform calibration of the measures of alignment to purpose (e.g., A(IU) and/or B(IU)) generated by the aggregator 109, based on time series data gathered by the system 100. The time series data can be gathered, for example, using anonymous point-in-time survey instruments (e.g., interactive surveys presented to the individual users IU (e.g., via their associated interfaces 104)), which are dynamic in that at least some subsequent prompts presented as part of the survey instrument are selected based on preceding responses (the responses including, for example, estimates). Multiple anonymous estimates spanning a period of time can be analyzed to improve the reliability of the assessments generated by the system 100. -The calibration of the system 100 and the measures generated by the system can provide benchmarks of individual and collective purpose measurements that can be used by an organization's leaders to quantitatively gauge / assess:

- Collective connection to, integration of, and operationalization of individual core purpose(s) and/or the organization's core purpose(s);
- Individual connection to, integration of and operationalization of individual core purpose(s) and/or the organization's core purpose(s);

- Changes in connection to, integration of and operationalization of individual core purpose(s) and/or the organization's core purpose(s);
- The desirability of intervention related to individual core purpose(s) and/or the organization's core purpose(s); and/or
- Impacts of initiatives on individual core purpose(s) and/or the organization's core purpose(s).

The system 100 can be used to measure the levels of individual core purpose(s) and/or connection to the organization's core purpose(s) for any individual user IU, group of individual users (e.g., grouped by department, region, functional role, etc.), or sub-group of individual users having a common purpose and set of goals, objectives and priorities..

FIG. 2 shows an engagement schema 200 for soliciting purpose, according to an embodiment. The engagement schema 200 can be implemented, for example, using the computer-implemented system 100 of FIG. 1 (e.g., via one or more of the compute devices 101, the interactive platform 108, the connector software 107 and/or the aggregator 109). As shown in FIG. 2, the engagement schema 200 has an adaptive spanning tree structure and includes a plurality of prompts (Prompt 1 (220) and Prompts 2 through "n" ((225A) through (225N))), where "n" is a predefined upper limit, and a plurality of responses (Response 1 (222) and Response 2 (226)). Each of the responses 222, 226 is associated with a prompt from the plurality of prompts (prompts 220 and 225A, respectively). The engagement schema 200 can be presented to each individual user IU from a plurality of individual users, for example via an interface (such as interface 104 of FIG. 1, e.g., a GUI) associated with that individual user IU, during an engagement session. The engagement schema 200 is "dynamic" in the sense that a path or trajectory followed through the spanning tree can depend on the sequential responses received from the individual user IU in response to the prompts as they are presented. For example, an individual user IU may be presented with a first prompt 220 at a first time, and can input (e.g., via their interface) a first response 222 in response to the first prompt 220. Based on, and in response to, the first response 222, the engagement schema 200 selects a first response category from a plurality of response categories 1 through "n" (categories 224A through 224N, respectively), where "n" is a predefined upper limit. The selection of the first response category is based on the first response 222, and can be considered a categorization or classification of the first response 222. In response to selecting the response category, and based on the selected response category 224A through 224N, the engagement schema 200 selects a next (second) prompt from the prompts 225A through 225N for presentation to the individual user IU at a second time after the first time. Following the example of FIG. 2, prompt 2 (225A) is presented to the individual user IU at the second time, and in response, the individual user IU inputs Response 2 (226). The engagement schema 200 then selects a second response category from a plurality of categories 1 through "n" (categories 228A through 228N, respectively), and the process proceeds within additional subsequent selections of prompts, presentation of prompts, receiving of individual user inputs, etc., for example until a predefined number of iterations have been performed, or until a desired confidence level has been reached (e.g., as calculated based on the responses received from the individual user within a given engagement session), or until the individual user ceases to interact with the engagement schema 200. Engagement sessions can be presented to individual users upon request by the individual user, upon request by an administrative user, and/or according to a predefined schedule. The dynamic nature of the engagement schema can result in the quantification of individual core purpose(s) and/or connection to the organization's core purpose(s) for individual users.

FIG. 3 is a graphical representation of relationships between prompts and responses, according to an embodiment. The graph 300 of FIG. 3 can represent, for example, the response category and prompt selection processes employed in the engagement schema 200 of FIG. 2. As shown in FIG. 3, two sets of prompts, 330 and 340 (including prompts 1 through "n" (330A-330N) and prompts 1 through "n" (340A-340N), respectively, "n" referring to a predefined upper limit) are associated with or linked to a set of response categories 350. The response categories 350 include categories 1 through "m" (250A through 350M, respectively), where "m" is a predefined upper limit that may the same as, of different from, the predefined upper limit "n." The associations (or relationships) between the prompts 330 and the response categories 350 are binary links 332, and the associations (or relationships) between the prompts 340 and the response categories 350 are weighted links 342.

FIG. 4 is a flow chart illustrating a method 400 for dynamically adjusting the strength of links within a directional graph (e.g., for dynamically adjusting the weights of weighted links, such as the weighted links 342 in FIG. 3), according to an embodiment. The method 400 can be implemented, for example, using the computer-implemented system 100 of FIG. 1 (e.g., via one or more of the compute devices 101, the interactive platform 108, the connector software 107 and/or the aggregator 109). As shown in FIG. 4, the method 400 includes providing a behavioral prompt [i] (also referred to herein as a "prompt") to a user, at 450, and gathering (e.g., receiving or retrieving) a behavioral response [j] (also referred to herein as a "response") from the user at 452 in response to the behavioral prompt [i]. At 454, one or more link weights (e.g., for links between prompts and response categories, such as the weighted links 342 in FIG. 3) are adjusted based on the responses [j]. The adjustment at 454 can be implemented, for example as shown at 454A through 454C: at 454A, link weights "w(j,k)" for each link from a plurality of links are sequenced; at 454B, and for each link from the plurality of links, a value "a" is set to a value of 1 if the response is related to or associated with that link, otherwise "a" is set to a value of -1; and at 454C, the link weights w(j,k) are adjusted as follows (wherein "+=" is an addition assignment operator):

$$W(j,k) += (a/N) * w(j,k)$$

Relevant dimensions are determined at 456, based on the adjusted link weights and/or based on the behavioral response [j], and a next behavioral prompt [l] is identified at 460. The identification of the next behavioral prompt [1] can be implemented, for example, as shown at 460A: Select 1 such that W(k,1) is maximized across all w(k,x) for all x. The method 400 then loops back to step 450, when the behavioral prompt [1] identified at 460 is provided as behavioral prompt [i] to the user. The method 400 can iterate as shown in FIG. 4, for example, until a predefined total number of behavioral prompts have been provided to the user, until a predefined total number of behavioral responses [j] have been collected, etc.

FIG. 5 illustrates a system block diagram of a compute device 501 (e.g., compute device 101 of FIG. 1), configured to perform data compression, according to an embodiment. As shown in FIG. 5, the compute device 501 includes a user interface 504 (e.g., user interface 104 of FIG. 1) that is operably coupled to a translation processor 550. The user interface 504 is configured to display a set of prompts 552B (also referred to as "stimuli"), such as prompts 225A-225N of FIG. 2 or prompts 330, 340 of FIG. 3, to an individual user and to receive from the user a set of responses 552C (such as responses 222, 226 of FIG. 2 or responses associated with the response categories 350 of FIG. 3) associated with the set of prompts 552B. The user interface 504 can be implemented as or can include one or more of a software application ("app"), a graphical user interface (GUI), and an input device such as a touchscreen, keyboard, mouse, keypad, etc. The user interface 504 can run on and/or be accessible via a user device (not shown) such as a desktop or laptop computer, or a mobile device such as a Blackberry or an iPhone. The translation processor 550 can be implemented using a microprocessor, an application-specific integrated circuit (ASIC), a central processing unit (CPU), a general purpose processor, etc. The translation processor 550 can be configured to perform operations on data received from an individual user via the user interface 504. The translation processor 550 can also be configured to collect data from the user device, for example by communicating with one or more software applications running on the user device (e.g., an email/calendar software such as Microsoft Outlook®, web conferencing software such as Cisco WebEx®, etc.). The translation processor 550 and, optionally, the user interface 504, are operably coupled to a memory 552, which may include a random access memory (RAM), a read only memory (ROM) device, a magnetic and/or optical recording medium and its corresponding drive, and/or another type of static and/or dynamic storage device that may store information and instructions for execution by the translation processor 550. Memory 552 can store processor-issuable instructions 552A as well as data including prompts 552B, responses 552C, weights 552D, distribution types 552E, inclination value ranges 552F, compressed multidimensional data profiles 552G, response categories 552H, and, optionally, one or more engagement schema (e.g., dynamic spanning tree(s)) 552J, for example in one or more databases. The processor-issuable instructions (or processor-readable instructions) can be stored in memory 552 and can cause the translation processor 550 to perform processes described herein.

Prompts 552B can include data that can be presented or displayed to an individual user via the user interface 504 to generate or trigger an action or response from the individual user, for example, a survey-type question, interactive form or graphic, prompt, pop-up window, calendar reminder, email, meeting request, hyperlink, news article, and/or the like. Responses 552C can include data that is received via the interface 504 in response to one or more of the prompts 552B, for example within a predetermined time period after the one or more prompts 552B are presented/displayed via the user interface 504. Response data 552C can include data input by an individual user action via the user interface 504 (e.g., typed text, voice-communicated text, touchscreen input data such as swipes, mouse clicks, etc.), for example where such individual user actions include answers to questions, minimizing or closing a pop-up window, accepting or declining a meeting request, etc. In other words, the response data 552C can be any type of response by the individual user via the user interface 504 in response to prompts 552B. Response data 552C can also include an indication of the time elapsed between the associated prompt 552B and the response 552C, and/or a manner of input of the response 105C (typed text, voice-communicated text, touchscreen input data such as swipes, mouse clicks, etc.). Each of the responses 552C can be paired with (or linked or associated with) an associated prompt 552B and, optionally, stored in the memory 552 as a prompt-response pair. Translation processor 550 can calculate (or determine) a weight 552D having a value (e.g., a value between 0 and 1) for each prompt-response pair, assign that weight to a prompt-response pair, and used that weight in the computation of one or more of the compressed multidimensional data profiles 552G. Weights 552D can be stored within stored memory 552.

As used herein, a compressed multidimensional data profile 552G is a vector representation of an individual user's preferences or "leanings" (or behavioral leanings) (also referred to herein as inclination value ranges 552F) associated with each of a set of attitudinal factors or "mindset dimensions" of interest (also referred to herein as distribution types 552E). The compressed multidimensional data profile 552G is generated through a series of interactions of the individual user with the user interface 504, and can be based in part on the relative importance that the individual user assigns for each distribution type 552E. For example, the relative importance assigned to a particular distribution type 552E can be based on (e.g., proportional to) the number of interactions by the user in building up or used as input to form a behavioral leaning (inclination value range 552F). The set or collection of distribution types 552E used to generate a compressed multidimensional data profile 552G can be case-specific or customized to the individual user.

Each individual user can be represented by an inclination value range 552F, which is a numerical distribution whose endpoints (i.e., maximum and minimum values) are predefined, for example, using one or more labels. A compressed multidimensional data profile 552G can include a set of inclination value ranges 552F, and is generated using "evidence" drawn from behaviors of individual users. As used herein, "evidence" is a behavioral choice or action of an individual user where that behavioral choice or action has been translated into a prompt-response signal (i.e., a pairing of one or more prompts 552B of FIG. 5 with one or more associated responses 552C) and mapped to a distribution type (e.g., distribution types 552E in FIG. 5), for example, based on a predefined set of rules. For example, if an individual user responds to a question (or "prompt") regarding whether he/she perceives a strong connection between the individual user's core purpose and their daily activities with a response of "yes," the question-answer pair (or prompt-response pair) can be translated into a positive prompt-response signal that is mapped to a particular distribution type. Evidence can be based on the occurrence of any action taken by an individual user, whether such an action is taken in response to an explicit prompt or not (e.g., scheduling a meeting without being prompted, providing feedback to an employee without being prompted, etc.). Through engagement of the individual user with the compute device 501, a set of prompt-response signals is generated, and each prompt-response signal of the set of prompt-response signals is mapped to one or more associated inclination values 552F of one or more compressed multidimensional data profiles 552G as described above.

In some embodiments, a multidimensional profile of an individual user is generated concurrently with, or after, the deployment of an interactive survey instrument (e.g., via the system 100 of FIG. 1) or other manner of presenting prompts to individual users and receiving response from the individual users in response to the prompt. The multidimensional profile of an individual user is generated based on at least one of: (1) an adjusted weight for a link between at least one response from a plurality of responses and an associated interactive prompt from a plurality of interactive prompts, (2) a dimension identified based on the at least one response, or (3) a classification identified for the at least one response based on the at least one dimension. Because the prompts can be generated based on discrete network resources retrieved from one or more of multiple networked databases and/or compute devices, and because the responses are generated from a common survey instrument or survey session (and, accordingly, stored within a common data record in a memory of the system), the multidimensional profile represents a compressed plurality of data clusters associated with multiple networked database systems.

FIG. 6 is a flow diagram illustrating a method for data compression, compatible with the compute device 501 of FIG. 5, according to an embodiment. As shown in FIG. 6, a method 600 includes receiving, at a processor (such as translation processor 550 of FIG. 5, for example via a user interface 504), response data associated with an individual user at 602 and including a digital representation of a prompt and a digital representation of a response associated with the prompt. The processor calculates a weight associated with the response data, based on a rule (or set of rules), at 604. The rule can be based on a credibility of the prompt-response data, a credibility of a source of the prompt-response data, and/or a level of uncertainty inherent in a pre-existing multidimensional profile for the individual user. The credibility of the prompt-response data or the credibility of the source of the prompt-response data can be determined by the individual user associated with the prompt-response data. For example, prompt-response data based on hearsay can have a lower credibility (and an associated lower weight) than prompt-response data based on observations. The weight assigned to prompt-response data can be based on an analytical / formulaic assessment of the credibility, based on a subjective assignment by the individual user or based on a combination. For example, credibility of prompt-response data initially can be subjectively assigned by an individual user (and then an associated weight subsequently assigned), and later then subjective assignment of credibility by the individual user can be calculated (or determined) by an analytical / formulaic assessment of the credibility (and associated weight).

At 606, the processor identifies and/or retrieves from memory a first distribution type based on and/or associated with the prompt. The processor then identifies and/or retrieves from memory a first range of inclination values based on the digital representation of the response, at 608. Based on the weight, the first distribution type, and the first range of inclination values, the processor assembles or compiles a compressed multidimensional data profile at 614. In some embodiments, prior to the processor compiling a compressed multidimensional data profile at 614, the processor identifies a second distribution type based on and/or associated with the digital representation of the prompt, at 610, and identifies a second range of inclination values based on the response, at 612. In other words, a single prompt can have more than one distribution type associated with it. In such cases, the processor then compiles a compressed multidimensional data profile at 614 based on the weight, the first distribution type, the second distribution type, the first range of inclination values, and the second range of inclination values.

In some embodiments, the prompt-response data received at the processor during method 600 is a first prompt-response data, and the method 600 further includes receiving a second prompt-response data including a digital representation of a second prompt and a digital representation of a second response. In such cases, the processor can modify the compressed multidimensional data profile based on the second prompt-response data.

In some embodiments, the processor is configured to present a series of prompts to an individual user via the user interface, and to receive a series responses via the user interface in response to the series of prompts, thereby generating a relatively large number of prompt-response pair data. The processor can then: (1) calculate a set of weights, each weight of the set of weights being uniquely associated with a prompt-response pair from the series of prompt-response pairs; (2) retrieve one or more distribution types (e.g., from memory), each associated (in some implementations, uniquely) with a prompt from the series of prompts; (3) retrieve one or more ranges of inclination values, each associated (in some implementations, uniquely) with a response from the series of responses and its associated distribution type; and (4) define a compressed multidimensional data profile based on the set of weights, the one or more distribution types, and the one or more ranges of inclination values.

An inclination value range, or "mindset leaning distribution," is a representation of an individual user's attitudes or leanings for a given distribution type (i.e., along a given mindset dimension). Inclination value ranges are computed by aggregating weighted prompt-response data into numerical values using pre-specified mappings, thereby transforming the prompt-response data into a compressed form that can be efficiently processed. To transform prompt-response data into inclination value ranges, each prompt, or event/situation that the individual user responded to, is mapped to one or more distribution types, and each response (or group of responses) to a particular prompt is mapped to a range of inclination values along the one or more distribution types. In some embodiments, inclination value ranges are represented as normalized distributions over numerical ranges. Inclination value ranges can have distributions that are unimodal or multimodal. A method of generating an inclination value range, according to an embodiment, is shown in FIG. 7.

As shown in FIG. 7, one or more prompt-response signals are received (e.g., at a processor and via a user interface such as interface 504 of FIG. 5 or user interface 104 of FIG. 1), based on an action (or inaction) of an individual user, at 716. Each prompt-response signal is assigned a weight via a translation processor (such as translation processor 550 of FIG. 5), at 318, based on one or more rules for assigning weights 720. The rules for assigning weights 720 can specify predetermined weights associated with a prompt and/or a response of the prompt-response signal. Alternatively or in addition, the rules for assigning weights 720 can assign or modify weights based on a source of the prompt-response signal, a predetermined credibility of the source of the prompt-response signal, or on a level of uncertainty of a current associated compressed multidimensional data profile and/or associated inclination value range. The translation processor looks up one or more distribution types (also referred to herein as "mindset dimensions") associated with a prompt of the prompt-response signal, at 722, by accessing a prompt-distribution type map 724 stored in memory. The prompt-distribution type map 724 (also referred to as a "prompt-dimension map") can be implemented, for example, in a lookup table that links / maps a particular prompt of (or prompt value from) the prompt-response signal to a particular distribution type ("mindset dimension). The translation processor also looks up one or more inclination values associated with a response of the prompt-response signal, at 726, by accessing a response-inclination value map 728 (e.g., stored in memory). The response-inclination value map 728 can also be implemented, for example, in a lookup table that links / maps a particular response of (or response value from) the prompt-response signal to a particular inclination value (leaning value). One or more current inclination value ranges associated with the individual user and with the prompt-response signal is retrieved or "read," at 730, from a table of current inclination value ranges 732 stored in the memory. At 734, the translation processor adjusts the one or more inclination value ranges retrieved at 730, based on the weight assigned at 718, the distribution type(s) retrieved at 722, the inclination value(s) retrieved at 726, and the current inclination value range(s) retrieved at 730. The adjusted inclination value range(s) are then stored in the memory, for example by replacing what was previously the "current inclination value range(s)," or by adding the adjusted inclination value range(s) as a separate record in the memory. The adjusted inclination value range(s), optionally in combination with other previously stored inclination value range(s), can subsequently be used by the translation processor to generate an adjusted compressed multidimensional data profile. An individual user's compressed multidimensional data profile can include a collection or consolidation of inclination value ranges along multiple distribution types.

In some embodiments, a method for dynamically adjusting the strength of links within a directional graph is performed (using a system such as the computer-implemented system 100 of FIG. 1) as a guided conversation. In some embodiments, a system for measuring core purpose is configured to generate a first spanning tree at a first time and in response to a first set of responses received from a plurality of individual users of the system, and to generate a second spanning tree (different from the first spanning tree) at a second time after the first time in response to a second set of responses received from the plurality of individual users of the system.

In some embodiments, a system for measuring core purpose is configured to generate a spanning tree based on an initial set of responses received from a plurality of individual users of the system, and subsequently, to adaptively and iteratively modify the spanning tree based on subsequently-received responses received from the plurality of individual users of the system. In other words, the spanning tree can be modified based on "feedback" generated within the system. The subsequently-received responses can be received at or within the system due to voluntary input(s) made by one or more of the individual users, and/or in response to a reminder (e.g., generated using artificial intelligence (AI)) provided to the one or more of the individual users to provide additional responses.

In some embodiments, a system for measuring core purpose is configured to present, via one or more displays thereof (e.g., GUIs, dashboards, etc.), representations of: individual core purpose(s), core purpose(s) of the organization, connectivity (or quantified connection strength) between individual core purpose(s) and discrete tasks, connectivity between core purpose(s) of the organization and discrete tasks, connectivity between individual core purpose(s) and one or more strategies, and/or connectivity between core purpose(s) of the organization and one or more strategies. Examples of discrete tasks can include, but are not limited to, calendar events, work assignments, documents, emails, meetings, etc. The displayed information can be used to communicate relative degrees of purpose connectivity (also referred to herein as a "purpose utilization metric") among individual users, with regard to each user's perceived or actual connectivity to their individual core purpose(s) and/or to the core purpose(s) of the organization. The system can be configured to detect a "mismatch" of purpose connectivity (e.g., a purpose connectivity below a predefined threshold level) for one or more individual users, and in response to detecting the mismatch, send a signal to cause one or more remediation actions to be implemented. Examples of remediation actions include, but are not limited to: removal of one or more events from the calendar(s) of the one or more individual users, rescheduling of one or more events within the calendar(s) of the one or more individual users, reallocation of one or more resources (e.g., computing resources, work assignments, etc.) of the one or more individual users, launching a survey at a compute device of the one or more individual users, cause display of one or more prompts (e.g., via a user interface) to the one or more individual users, etc.

In some embodiments, a system for measuring core purpose is configured to compute quantitative measurements of individual core purpose(s), core purpose(s) of the organization, connectivity (or quantified connection strength) between individual core purpose(s) and discrete tasks, connectivity between core purpose(s) of the organization and discrete tasks, connectivity between individual core purpose(s) and one or more strategies, connectivity between core purpose(s) of the organization and one or more strategies. The system can also generate labels or other descriptors (e.g., using natural language processing ("NLP")) and store associations between the labels or other descriptors and the quantitative measurements in a memory of the system. The labels or other descriptors can represent individual core purpose(s), core purpose(s) of the organization, activities, tasks, etc. The quantitative measurements and/or the descriptors can be used to automatically generate a digital footprint for each individual user, and the digital footprints can be used, for example, to assess compatibility between individual users. Alternatively or in addition, quantitative measurements and/or the descriptors can be used as a basis for comparing multiple resource allocation scenarios, or for optimizing one or more resource allocation scenarios. When comparing multiple resource allocation scenarios, a resource allocation scenario may be automatically selected based on the comparison, and in response to the automatic selection, one or more actions may be automatically be deployed (e.g., assigning a work assignment to one or more individual users, modifying a schedule of one or more individual users, etc.).

FIG. 8 is a flow chart illustrating a computer implemented method 800 for soliciting user responses and computing a multidimensional profile of the user, according to an embodiment. The method 800 of FIG. 8 can be implemented, for example, by one or more compute devices such as compute device 501 of FIG. 5. As shown in FIG. 8, the method includes sending, at 860, from a processor and via a communications network, a signal to cause sequential display of a plurality of interactive prompts to a user. At 862, at least one signal representing a plurality of responses is received, at the processor, via the communications network, and in response to the user interacting with the plurality of interactive prompts. An adjusted weight is calculated at 864, for a link between the at least one response from the plurality of responses and an associated interactive prompt from the plurality of interactive prompts. At least one dimension is identified at 866 based on the at least one response, and a classification for the at least one response is determined at 868 based on the at least one dimension. A multidimensional profile of the user is computed at 870 based on the adjusted weight and the classification, and a representation of the multidimensional profile of the user is displayed, at 872, via a user interface within the communications network.

In some implementations, calculating the adjusted weight is performed according to:

$$W(j.k) += (a/N) * w(j,k),$$

where "W(j,k)" is the adjusted weight, "a" is an adjustment parameter (e.g., +1 or -1, depending on the at least one response), "N" is a cumulative number of responses of the at least one response, w(j,k) is an initial weight associated with the at least one response, and "+=" is an addition assignment operator.

In some implementations, the method 800 also includes receiving, at the processor and via the communications network, multiplexed data from a plurality of operational systems, the computing the multidimensional profile being further based on the multiplexed data.

In some implementations, the method 800 also includes receiving, from a multiplexer, extracted data from a plurality of discrete network resources, the computing the multidimensional profile being further based on the extracted data.

In some implementations, the method 800 also includes determining a characterization parameter for the user based on at least one of the at least one response or the multidimensional profile. The characterization parameter can include one or more of: a core purpose of the user, a connectivity between a core purpose of an organization associated with the user and a task associated with the user, a connectivity between a core purpose of the user and a task associated with the user, and a connectivity between a core purpose of the user and a strategy of an organization associated with the user.

FIG. 9 is a flow chart illustrating a computer implemented method 900 for soliciting user responses and calculating a characterization parameter, according to an embodiment. The method 900 of FIG. 9 can be implemented, for example, by one or more compute devices such as compute device 501 of FIG. 5. As shown in FIG. 9, the processor-implemented method 900 includes iteratively assessing, at 980 and via a processor, a characterization parameter for a user within an organization. The iterative assessment 980 includes causing sequential display, at 982, of a plurality of prompts to the user, via a user interface (e.g., user interface 104 of FIG. 1), based on an engagement schema, a second prompt and each subsequent prompt from the plurality of prompts being based on a response, from a plurality of responses, received in response to a preceding prompt from the plurality of prompts. The iterative assessment 980 also includes calculating the characterization parameter at 984 based on the plurality of responses, and causing display at 986 of a representation of the characterization parameter via the user interface. In some implementation, the engagement schema includes a spanning tree algorithm.

In some implementations, the characterization parameter includes one or more of: a core purpose of the user, a connectivity between a core purpose of an organization associated with the user and a task associated with the user, a connectivity between a core purpose of the user and a task associated with the user, and a connectivity between a core purpose of the user and a strategy of an organization associated with the user.

FIG. 10 is a flow chart illustrating a computer implemented method 1000 for quantifying purpose connectivity and causing remedial actions to be performed, according to an embodiment. The method 1000 of FIG. 10 can be implemented, for example, by one or more compute devices such as compute device 501 of FIG. 5. As shown in FIG. 10, the method 1000 includes assessing, at 1090 and via a processor, a purpose connectivity for a user within an organization. The assessing 1090 includes sequentially displaying, at 1092, a set of prompts to the user, via a user interface, and based on an engagement schema. A second prompt and each subsequent prompt from the set of prompts is based on a response, from a set of responses, received in response to a preceding prompt from the set of prompts. The assessing 1090 also includes calculating, at 1094, the purpose connectivity based on the plurality of responses. The method 1000 also includes, at 1096, detecting that the purpose connectivity is below a predefined threshold 1096, and in response to detecting that a value of the purpose connectivity is below a predefined threshold, sending a signal at 1098 to cause a remedial action. The remedial action can include one or more of: removing of an event from a calendar associated with the user, rescheduling an event within the calendar associated with the user, reallocating a computing resource associated with the user, modifying a work assignment associated with the user, launching a survey at a compute device of the user, or displaying a message via a user interface of the user. The purpose connectivity can include at least one of: a connectivity between a core purpose of an organization associated with the user and a task associated with the user, a connectivity between a core purpose of the user and a task associated with the user, a connectivity between a core purpose of the user and a strategy of an organization associated with the user.

Examples of metrics that can be generated and tracked (in any combination) by systems of the present disclosure, and used in methods of the present disclosure (e.g., as a basis for generating individualized "workprints," and/or as a basis for generating scores for individuals), are provided in Table 1, below. The coefficients and weights for the metrics of Table 1 can be calibrated based on user inputs collected, for example, via one or more surveys.

**Table 1: Example Metrics for Display and Tracking**

| Action | Metric | Detail | Unit |
|---|---|---|---|
| Whether driver was created | Driver Edits | Whether at least one driver was turned on within last 30 days | Number of priorities that were created or modified in the last 30 days |
| Whether individual purpose was created | Purpose Edits | Whether individual purpose was created | Boolean to represent whether purpose is defined by leader |
| Whether driver was changed / edited | Driver Edits | Whether driver was created, changed / updated / confirmed or edited within last 30 days | Number of priorities that were modified (edited or time changed) in the last 30 days |
| Whether driver was confirmed | Driver Edits | Whether driver was confirmed within last 30 days | Number of priorities that were confirmed or modified in the last 30 days |

(continued)

| Action | Metric | Detail | Unit |
|---|---|---|---|
| Whether time commit to priorities was modified | Driver Edits | Time commitment to at least one driver was updated | Number of drivers with changes to time commitment made in the last 30 days |
| Whether drivers are linked to BUS UNIT | Driver Linking | Whether at least one driver is mapped to a current bus unit | Number of drivers that are mapped to business unit drivers |
| Whether visited Organizational purpose | Organization Purpose | Whether the organization purpose content was visited | Boolean to represent that organizational purpose content was visited |
| Whether stated purpose was linked to organizational purpose | Purpose Linking | Whether a valid link exists between individual purpose and organizational purpose | Boolean to represent that a valid confirmedlink exists |
| Whether stated purpose was linked to organizational strategy | Strategy Linking | Whether the stated purpose was linked to organizational strategy | Vector representation of link between purpose and organizational strategy |
| Number of events connected to purpose | Event Linking | Scheduled events linked to Purpose | Boolean vector representing event links to purpose |
| Number of drivers/individual work connected to purpose | Driver Linking | Linking drivers to purpose | Boolean vector describing links between drivers and purpose |
| Alignment to team members | Peer Alignment | Alignment with other team members | Boolean vectors indicating alignment with other team members |
| Number of purpose related messages triggered | Message triggering | Purpose related messages triggered by leaders | Number of purpose related messages triggered |
| Promptness of responses by supervisor to priority alignment requests | Driver Alignment Response | Must have received align requests and responded within 2 days of the request to qualify for this | Extra points for alignment response with 2 days |
| Clicking on "Return on Leadership" (ROL) essentials - from platform, plugin, or mobile | Acting from ROL Essentials | At least one action from ROL Essentials | Number of clicks from the action link within ROL Essentials in 30 days |
| Promptness of responses to ROL requests from execs | Response to Exec Requests | Must have received an executive request and responded within 2 days of the request to qualify for | Extra points for alignment response with 2 days |
| Viewed capacity forecast | Capacity Forecast | View of capacity forecast page | Number of LFF Views in a 90 day period |
| Visits to INDIVIDUAL ROL index | View Individual ROL | yes or no | Number of views of individual ROL in a 30 day period |
| Share of individual time committed to priorities | Time committed | At least 20% (10 hours) per week is committed to all drivers combined | Percentage of time committed to priorities - current |
| Percentage of next steps completed | Next Steps Completed | Completed at least one next step by the due date if they have next | Percentage of next steps created during the last 30 days that are marked as completed |

(continued)

| Action | Metric | Detail | Unit |
|---|---|---|---|
| Number of meetings agenda that were requested | Agendas Requested | At least one agenda was requested | Number of request agendas |
| Whether visited inContact | inContact Visited | yes or no | Number of visits to the inContact page during a 90 day period |
| Number of views of crews | Number of Crew Views | yes or no | Number of views of crews in the last 60 days |
| Liking ROL essentials | Like on ROL Essentials | Liked/disliked at least one action from ROL Essentials | Number of likes/dislikes for ROL Essentials in the last 30 days |
| Home page interactions with cards | | | |
| Other leaders Profile view | Other Profile View | yes or no | Number of visits to other leaders' profile in the last 30 days |
| Other business unit profile view | Other BU Profile View | yes or no | Number of visits to other business unit drivers in the last 30 days |
| Org profile view | Org Profile View | yes or no | Number of visits to organizational drivers in the last 30 days |
| Other bus unit driver profile view | Other BU Driver View | yes or no | Number of visits to other business unit profile view in the last 30 days |

**Definitions:**

- Driver: Area of focus / key priority related to strategy and work
- Organizational Purpose: a fundamental reason for the organization's existence
- Individual Purpose: a fundamental reason for the work that an individual performs

FIG. 11 is a diagram of an example neural network, suitable for performing calibrations (an example of which is provided below) of the present disclosure, according to an embodiment.

FIG. 12 is a flow diagram illustrating a method for tracking metrics connectivity, according to an embodiment. As shown in FIG. 12, the processor-implemented method 1200 includes receiving input, via a processor, from each user from a plurality of users (e.g., via associated graphical user interfaces (GUIs) of one or more associated compute devices), at 1202. At 1204, a user purpose profile is defined for each user from the plurality of users. At 1206, a connection is defined between a purpose of each user from the plurality of users and an organizational purpose of an associated organization. In other words, the method 1200 includes, at 1206, connecting a purpose of each user from the plurality of users and an organizational purpose of an associated organization. As described herein, "connecting" user purpose(s) to organizational purpose refers to at least one of: tracking a degree of consonance or alignment between the user purpose(s) and the organizational purpose, monitoring an association or relationship between the user purpose(s) and the organizational purpose, assessing a strength of correlation between the user purpose(s) and the organizational purpose, or generating a representation of a relationship between the user purpose(s) and the organizational purpose. In this context, the user "purpose" can refer to a predefined objective or goal of that user, which may be predefined by that user (e.g., via interactions with a GUI), and which may be quantitative in nature (e.g., a numerical target), qualitative in nature (e.g., a text-based description thereof), or both. Similarly, the organizational "purpose" can refer to a predefined objective or goal of that organization, which may be predefined by an individual associated with that organization (e.g., via interactions with a GUI), and which may be quantitative in nature (e.g., a numerical target), qualitative in nature (e.g.,

a text-based description thereof), or both. The user purpose and/or the organizational purpose can be stored, in a memory operably accessible by the processor, as a discrete data structure that includes one or more of: a byte string or sequence, a bit string or sequence, a character string, a block of text, one or more delimiters, a vector, a matrix, a hash value or function, an array, a graph, a hierarchical tree, a linked list, a table cell, a table row, a table column, a token, or a database entry / record.

The connection definition at 1206 is performed by comparing, at 1206A, via the processor and for each user from the plurality of users, (i) activity data associated with that user, and (ii) the user purpose profile (defined at 1204) associated with that user. At 1206B, an individual purpose connection metric is tracked for each user from the plurality of users, and/or an aggregated purpose connection metric (i.e., an aggregation of multiple purpose connection metrics) is tracked for the plurality of users, via the processor and based on the comparing. The connection definition at 1206 also includes, at 1206C, repeatedly causing a signal representing the individual purpose connection metric for each user from the plurality of users and/or the aggregated purpose connection metrics to be sent to a display of a compute device (e.g., for presentation to one or more users).

In some implementations, the method 1200 also includes automatically retrieving, via the processor, in real time and via a telecommunications network, the activity data associated with each user from the plurality of users, the first activity data including data associated with at least one software application accessible via the telecommunications network. As used herein, "real time" refers to instantly or substantially instantly, for example with negligible latency or transmission delays.

In some implementations, the method 1200 also includes calculating the individual purpose connection metric for each user from the plurality of users based on the comparing, each individual purpose connection metric being an inferred value that is not directly calculable based on the activity data of that user.

In some implementations, the method 1200 also includes calculating the individual purpose connection metric for each user from the plurality of users based on the comparing, each individual purpose connection metric being an inferred value that is not directly calculable based on the user purpose profile of that user.

In some implementations, the method 1200 also includes calculating the individual purpose connection metric for each user from the plurality of users based on the comparing, each individual purpose connection metric being an inferred value that is (i) not directly calculable based on the activity data of that user, and (ii) not directly calculable based on the user purpose profile of that user.

In some implementations, the method 1200 also includes detecting, based on the tracking, that the individual purpose connection metric of a user from the plurality of users is below a predefined threshold, and automatically causing display of an alert via the display of the compute device, in response to detecting that the individual purpose connection metric of the user from the plurality of users is below the predefined threshold.

In some implementations, the method 1200 also includes detecting, based on the tracking, that the individual purpose connection metric of a user from the plurality of users is below a predefined threshold, and automatically causing display of a user-selectable remediation object via the display of the compute device, in response to detecting that the individual purpose connection metric of the user from the plurality of users is below the predefined threshold.

In some implementations, the method 1200 also includes identifying a task for a user from the plurality of users based on the tracking, and automatically causing a notification to be sent to the display of the compute device, the notification including a recommendation that the user perform the task.

In some implementations, the method 1200 also includes identifying a recommendation for a user from the plurality of users based on the tracking, and automatically causing a signal to be sent to the display of the compute device, to cause display of a representation of the recommendation. The recommendation can include at least one of: a recommendation to reallocate time within a calendar of the user, a recommendation to add a new task to the calendar of the user, or a recommendation to remove an existing task from the calendar of the user.

In some implementations, the receiving the input includes causing sequential display of a plurality of prompts to a first user from the plurality of users, a second prompt and each subsequent prompt from the plurality of prompts being based on a response, from a plurality of responses, received from the first user in response to a preceding prompt from the plurality of prompts. The sequential display can be based on an engagement schema (e.g., a spanning tree algorithm).

In some implementations, the tracking is performed continuously over time. In other implementations, the tracking is performed according to a predefined schedule.

In some embodiments, a method includes connecting, via a processor and for an organization having an organization strategy and an organization purpose, the organization strategy to the organization purpose by calculating a first purpose connection metric based on activity data associated with the organization. The method also includes connecting, via the processor and for a business unit of the organization and having a business unit strategy, the business unit strategy to the organizations purpose by calculating a second purpose connection metric based on activity data associated with the organization. The method also includes connecting, via the processor and for an individual employed at the organization and having an individual purpose, an individual role, and an individual work, the individual purpose to the individual role and the individual work by calculating a third purpose connection metric based on activity data associated with the individual. The method also includes connecting, via the processor, the individual role and the individual work to the organization strategy by calculating a fourth purpose connection metric based on activity data associated with the individual and activity data associated with the organization. The method also includes connecting, via the processor, the individual role and the individual work to the organization purpose by calculating a fifth purpose connection metric based on activity data associated with the individual and activity data associated with the organization. The method also includes causing display, via an interactive graphical user interface (GUI) of a compute device , graphical depictions of each of the first purpose connection metric, the second purpose connection metric, the third purpose connection metric, the fourth purpose connection metric, and the fifth purpose connection metric.

In some implementations, the method also includes automatically triggering a remedial action in response to at least one of the first purpose connection metric, the second purpose connection metric, the third purpose connection metric, the fourth purpose connection metric, or the fifth purpose connection metric. The remedial action can include one of: removing of an event from a calendar associated with the individual, rescheduling an event within the calendar associated with the individual, reallocating a computing resource associated with the individual, modifying a work assignment associated with the individual, launching a survey at a compute device of the individual, or displaying a message via an interface of the individual.

In some implementations, the first purpose connection metric, the second purpose connection metric, the third purpose connection metric, the fourth purpose connection metric, and the fifth purpose connection metric, collectively, define a first set of metrics associated with a first time period, and the method also includes recalculating, via the processor and at a second time after the first time period, each of the first purpose connection metric, the second purpose connection metric, the third purpose connection metric, the fourth purpose connection metric, and the fifth purpose connection metric over time, to define a second set of metrics associated with a second time period. The first set of metrics is compared to the second set of metrics, to identify a trend, and a representation of the trend is automatically displayed via the GUI of the compute device.

In some embodiments, a non-transitory, processor-readable medium stores instructions that, when executed by a processor, cause the processor to receive input, via a telecommunications network of an organization and from each user from a plurality of users within the organization. The non-transitory, processor-readable medium also stores instructions that, when executed by a processor, cause the processor to define, based on the input, a user purpose profile for each user from the plurality of users. The non-transitory, processor-readable medium also stores instructions that, when executed by a processor, cause the processor to define an association, for each user from the plurality of users, between a purpose parameter defined by that user and a predefined purpose of the organization, by: (1) comparing, for each user from the plurality of users, (i) activity data associated with that user, and (ii) the user purpose profile associated with that user; (2) tracking, based on the comparing, at least one of: an individual purpose connection metric for each user from the plurality of users, or an aggregated purpose connection metric for the plurality of users; and (3) repeatedly causing a signal representing at least one of the individual purpose connection metric for each user from the plurality of users or the aggregated purpose connection metric to be sent to a display of a compute device.

In some implementations, the input is generated in response to sequential display of a sequence of prompts, from a plurality of sequences of prompts, to each user from the plurality of users, a second prompt and each subsequent prompt from a given sequence of prompts from the plurality of sequences of prompts being based on a response, from a plurality of responses, received from the associated user in response to a preceding prompt from that sequence of prompts.

In some implementations, the non-transitory, processor-readable medium also stores instructions that, when executed by a processor, cause the processor to (1) detect, based on the tracking, that the individual purpose connection metric of a user from the plurality of users is below a predefined threshold, and (2) at least one of: (A) automatically cause display of a user-selectable remediation object via the display of the compute device, in response to detecting that the individual purpose connection metric of the user from the plurality of users is below the predefined threshold, (B) automatically cause display of an alert via the display of the compute device, in response to detecting that the individual purpose connection metric of the user from the plurality of users is below the predefined threshold, or (C) automatically trigger a remedial action in response to detecting that the individual purpose connection metric of the user from the plurality of users is below the predefined threshold.

In some implementations, the non-transitory, processor-readable medium also stores instructions that, when executed by a processor, cause the processor to: (1) detect, based on the tracking, that the individual purpose connection metric of a user from the plurality of users is below a predefined threshold, and (2) automatically trigger a remedial action in response to detecting that the individual purpose connection metric of the user from the plurality of users is below the predefined threshold. The remedial action can include at least one of: reallocating time within a calendar of the user, adding a new task to the calendar of the user, or removing an existing task from the calendar of the user.

In some implementations, the instructions to define the user purpose profile for each user from the plurality of users include instructions to define the user purpose profile for each user from the plurality of users based on a multi-

dimensional profile, from a plurality of multidimensional profiles, associated with that user.

As used herein, a "user purpose profile" can refer to a stored set of parameters (data), optionally defined at least in part by user input, optionally including at least one weight, that collectively represents an objective (e.g., a purpose-related goal) of the user. The user purpose profile can be tracked and used to improve one or more of: task allocation to one or more users, allocation of a given user's time within one or more calendars, and workflow within a workflow management software framework. For example, the allocation of a newly-defined task within the workflow management software to one or more users may be performed automatically based on the one or more associated user purpose profiles for the one or more users. Such automatic allocation of tasks to users (e.g., by adding to events to the calendars of the users without the users providing task-related input), or the redistribution of those tasks within the calendars of the user, can result in more efficient task distribution within a system, in a manner that the users have indicated is aligned with their objectives.

As used herein, an "individual purpose connection metric" can refer to a processordetermined (e.g., calculated) score representing an alignment between a user purpose profile and a user's data (e.g., representing actions, such as calendared activities, and/or representing input provided by one or more users) within a monitored software system. In some implementations, the higher the individual purpose connection metric, the more aligned the user's actions are with their associated user purpose profile. Higher individual purpose connection metrics can be used to predict qualitative variables, such as a user's job satisfaction, and/or quantitative variables such as predicted efficiency or speed at performing / completing a given work-related task.

FIGS. 13 through 29 show example user-navigable GUI screens, according to various embodiments. FIG. 13 shows an example summary screen showing a snapshot of a user's metrics within a system of the present disclosure. As shown in FIG. 13, the metrics include an overall "Return on Leadership" (ROL) score (in this case, the ROL score is 392, presented in numeric form and on a graphical scale bar), a strategic clarity score, a leadership alignment score, a connection to purpose score, and a focused action score. The summary screen also shows trend information (selectable by the user, via radio buttons, for viewing as weekly or monthly information) over time. The summary screen also includes a menu of user-selectable options for navigation to other GUI screens, including Insights, home page ("Me"), Others, Marketing, company page ("Indiggo, LLC"), reminders ("Remember"), and calendar information ("Meetings"). FIG. 14 shows a GUI screen reflecting an improvement to a user's ROL score, stating the amount of improvement ("33 pts Your ROL increased"), and showing the improved ROL score - 532 - presented in numeric form and on a graphical scale bar. The GUI screen of FIG. 14 also include a user-selectable button "VIEW INDIGGO DRIVERS" that, when selected by the user, causes navigation to another GUI screen listing drivers (or factors) impacting the ROL score.

FIG. 15 shows an example GUI screen displaying a dashboard-style presentation of global (ROL) scores and other metrics (strategic clarity scores, leadership alignment scores, connection to purpose scores, and focused action scores) for a variety of different business units within an organization (namely, Client Services, Executives, Marketing, Engineering, Finance, Sales, and Information Technology (IT)). FIG. 16 shows an example GUI screen displaying drivers for individual users, which are taken into account in the calculation of ROL scores for the five different users represented, along with the relative importances (e.g., weights) for each of the drivers.

FIG. 17 shows an example GUI screen displaying an interactive leaderboard listing the highest-performing users within an organization, as ranked based on their ROL score. By selecting a given user (e.g., by clicking on their name or on their displayed ROL score), additional details for that user can be displayed. In some implementations, only a subset of users meeting a predefined criteria (e.g., based one or more predefined rules) are listed on the leaderboard. The interactive leaderboard provides a visual comparison among participating users based on their ROL scores, their other metrics (strategic clarity scores, leadership alignment scores, connection to purpose scores, and focused action scores), the amount of time they have been on the leaderboard (e.g., a "streak" of at least a predefined number of days), and the number of times that user has, historically, appeared on the leaderboard.

FIG. 18 shows an example GUI object displaying organizational drivers that are taken into account in the calculation of ROL scores for the organization, along with the relative importances (e.g., weights) for each of those drivers. The GUI object of FIG. 18 also include text-based descriptions of each driver, a real-time tally of the number of hours invested in that driver to-date (e.g., the number of labor hours worked that are associated by that driver), and a number of days that the particular driver has been active in the system.

FIG. 19 shows an example interactive GUI object for creating a new task, including a task name, a category description of the degree to which the new task supports a core purpose of the organization, and a public description of the task. The GUI object of FIG. 19 also includes user-selectable buttons to cancel or save the new task. Once a new task is saved, participation in the task by one or more users within the organization can be tracked and factored into the calculation of one or more metrics discussed above. FIG. 20 shows an example interactive GUI screen through which a user can explore drivers of the organization, broken down by business unit, with statistics such as the number of contributing leaders, the total number of associated leaders, etc.

FIG. 21 shows an example interactive GUI screen with user-defined proposed drivers, and soliciting feedback from other users within the organization (e.g., managers). As shown in FIG. 21, the drivers can include tasks, proposed time commitments, descriptions, etc. The user providing feedback can add comments via the embedded comment objects in the GUI screen and/or can indicate approval of the proposed drivers by selecting the thumbs up icon for each driver. FIG. 22 shows an example GUI object showing the percentage of leaders within an organization that have been determined by the system to have an indirect connection to the predefined purpose "Create Positive Enduring Change for Others," the percentage of leaders within an organization that have been determined by the system to have a moderate connection to the predefined purpose "Create Positive Enduring Change for Others," and the percentage of leaders within an organization that have been determined by the system to have a direct connection to the predefined purpose "Create Positive Enduring Change for Others." The GUI object of FIG. 22 presents this information in graphical form, so that the relative distribution can be readily observed.

FIG. 23 shows an example interactive GUI screen showing an overview of a task/project "Social Media Ramp-up." The overview includes descriptions of the task/project itself, the associated drivers, the associated business unit (Marketing), the number of leaders within the organization that are contributing to the task/project, the relative participation of leaders on that task/project, the date of creation, the connection of that task/project to a predefined purpose ("Helping Free the World of Poverty") presented graphically, etc.

FIG. 24 shows an example interactive GUI screen showing an overview of activity (tasks, drivers, etc.) for an individual business unit (Marketing) within an organization. The overview includes a chart forecasting capacity (selectable by month) for contributing leaders, numbers of contributing leaders to each driver from multiple drivers, the total number of hours invested in that driver to-date, a number of days since each of the drivers was defined, a graphical depiction of commitment vs. investment as a trend over 6 months, etc.

FIG. 25 shows an example GUI screen displaying a layered dashboard-style presentation of collective / global ROL scores and other metrics ("ROL Fundamentals" - strategic clarity score, leadership alignment score, etc.), with selectable panes for the organization ("Indiggo, LLC"), an individual user ("Me"), and a business unit ("Marketing"). FIG. 26 shows another example GUI screen displaying a layered dashboard-style presentation of ROL driver insights, with selectable panes for the organization ("Indiggo, LLC"), an individual user ("Me"), and a business unit ("Marketing"). Each pane includes selectable tabs to cause display of total investment hours (e.g., broken out by business unit on the organization pane), contributing leaders, and average contribution per leader, for each of the multiple predefined drivers.

FIG. 27 shows an example GUI screen displaying a dashboard-style presentation of various filterable data associated with organizational purpose, including the connection to that organizational purpose for individual drivers, the connection to that organizational purpose for individual leaders / users, an aggregated connection to purpose score, and a word cloud. As shown in FIG. 27, each subsection of the GUI screen can be filtered to display data for the entire organization, or by a predefined subset thereof (e.g., business units, individuals, etc.).

FIGS. 28-29 show example GUI screens displaying a dashboard-style presentation of collective ROL scores, broken out by business unit. For each business unit, an overall score is displayed, along with scores / metrics for each of connection to purpose, strategic clarity, leadership alignment, and focused action. Each score listing is sortable (e.g., ascending or descending), and a graphical depiction showing the positioning of an overall ROL score for a given business unit between a status quo value and a target value (along a spectrum from a risk zone to an ROL zone) is shown.

In some embodiments, a processor-implemented method includes sending, from a processor and via a communications network, a signal to cause sequential display of a plurality of interactive prompts to a user. The method also includes receiving, at the processor, via the communications network, and in response to the user interacting with the plurality of interactive prompts, at least one signal representing a plurality of responses. The method also includes calculating an adjusted weight for a link between the at least one response from the plurality of responses and an associated interactive prompt from the plurality of interactive prompts. The method also includes identifying at least one dimension based on the at least one response, and determining a classification for the at least one response based on the at least one dimension. The method also includes computing a multidimensional profile of the user based on at least one of the adjusted weight, the at least one dimension, and the classification, the multidimensional profile representing a compressed plurality of data clusters associated with multiple networked database systems. The method also includes causing display of a representation of the multidimensional profile of the user via a user interface within the communications network.

In some embodiments, calculating the adjusted weight is performed according to:

$$W(j.k) \mathrel{+}= (a/N) * w(j,k),$$

where "W(j,k)" is the adjusted weight, "a" is an adjustment parameter (e.g., +1 or -1, depending on the at least one response), "N" is a cumulative number of responses of the at least one response, w(j,k) is an initial weight associated with the at least one response, and "+=" is an addition assignment operator.

In some embodiments, the processor-implemented method also includes receiving, at the processor and via the communications network, multiplexed data from a plurality of operational systems, wherein the computing the multidimensional profile is further based on the multiplexed data.

In some embodiments, the processor-implemented method also includes receiving, from a multiplexer, extracted data from a plurality of discrete network resources, the computing the multidimensional profile being further based on the extracted data.

In some embodiments, the processor-implemented method also includes determining a characterization parameter for the user based on at least one of the at least one response or the multidimensional profile. In some such embodiments, the characterization parameter can be a core purpose of the user. In other such embodiments, the characterization parameter is a connectivity between a core purpose of an organization associated with the user and a task associated with the user. In still other such embodiments, the characterization parameter is a connectivity between a core purpose of the user and a task associated with the user. In still other such embodiments, the characterization parameter is a connectivity between a core purpose of the user and a strategy of an organization associated with the user.

In some embodiments, a processor-implemented method includes iteratively assessing, via a processor, a characterization parameter for a user within an organization, by iteratively: (1) causing sequential display of a plurality of prompts to the user, via a user interface, based on an engagement schema, a second prompt and each subsequent prompt from the plurality of prompts being based on a response, from a plurality of responses, received in response to a preceding prompt from the plurality of prompts, (2) calculating the characterization parameter based on the plurality of responses, and (3) causing display of a representation of the characterization parameter via the user interface.

In some embodiments, the engagement schema includes a spanning tree algorithm.

In some embodiments, the characterization parameter is a core purpose of the user. In other embodiments, the characterization parameter is a connectivity between a core purpose of an organization associated with the user and a task associated with the user. In still other embodiments, the characterization parameter is a connectivity between a core purpose of the user and a task associated with the user. In still other embodiments, the characterization parameter is a connectivity between a core purpose of the user and a strategy of an organization associated with the user.

In some embodiments, a processor-implemented method includes assessing, via a processor, a purpose connectivity for a user within an organization, by (1) causing sequential display of a plurality of prompts to the user, via a user interface, based on an engagement schema, a second prompt and each subsequent prompt from the plurality of prompts being based on a response, from a plurality of responses, received in response to a preceding prompt from the plurality of prompts, and (2) calculating the purpose connectivity based on the plurality of responses. The processor-implemented method also includes detecting that a value of the purpose connectivity is below a predefined threshold, and sending a signal, in response to detecting that the value of the purpose connectivity is below the predefined threshold, to cause a remedial action.

In some embodiments, the remedial action includes one of: removing of an event from a calendar associated with the user, rescheduling an event within the calendar associated with the user, reallocating a computing resource associated with the user, modifying a work assignment associated with the user, launching a survey at a compute device of the user, or displaying a message via the user interface of the user.

In some embodiments, the purpose connectivity is a connectivity between a core purpose of an organization associated with the user and a task associated with the user.

In some embodiments, the purpose connectivity is a connectivity between a core purpose of the user and a task associated with the user.

In some embodiments, the purpose connectivity is a connectivity between a core purpose of the user and a strategy of an organization associated with the user.

In some embodiments, a method includes performing a calibration, via a processor and during a first time period, by: (1) receiving, at a first time and for each user from a plurality of users, a plurality of inputs made by that user via a graphical user interface, (2) automatically retrieving, via the processor, in real time and via a telecommunications network, first activity data associated with each user from the plurality of users, the first activity data including data associated with at least one software application accessible via the telecommunications network, (3) defining a plurality of profile types based on the pluralities of inputs and the first activity data associated with each user from the plurality of users, each profile type from the plurality of profile types associated with a correlation between a user purpose and a user network-accessed activity, and (4) assigning each user from the plurality of users to one profile type from the plurality of profile types. The method also includes comparing, during a second time period after the first time period and for each user from at least a subset of users from the plurality of users, (i) second activity data associated with that user, and (ii) and the profile type associated with that user. The method also includes tracking, via the processor and based on the comparing, a purpose compliance metric for each user from the at least the subset of users from the plurality of users. The purpose compliance metric can represent a degree of alignment between behavior of that user and the profile type associated with that user. The method also includes repeatedly causing a signal representing the tracked purpose compliance metrics to be sent to a display of a compute device.

In some embodiments, a method includes determining, via a processor, a plurality of profile types based on first activity data associated with a plurality of users within a telecommunications network of an organization, the first activity data including data associated with at least one software application accessible via the telecommunications network, each profile type associated with a correlation between a user purpose and a user network-accessed activity. The method also includes assigning, via the processor, each user from the plurality of users to one profile type from the plurality of profile types. The method also includes comparing, via the processor, (i) second activity data associated with a user from the plurality of users, the second activity data including real time data automatically retrieved via the telecommunications network, and (ii) the profile type associated with that user. The method also includes tracking, via the processor and based on the comparing, a purpose compliance metric for the user. The method also includes iteratively causing a signal representing the tracked purpose compliance metric to be sent to a display of a compute device.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, field programmable gate array (FPGA), and/or an application specific integrated circuit (ASIC). Software modules (executed on hardware) can be expressed in a variety of software languages (e.g., computer code), including C, C++, Java™, Ruby, Visual Basic™, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

While various embodiments have been described above, it should be understood that they have been presented by way of example only, and not limitation. Where methods described above indicate certain events occurring in certain order, the ordering of certain events may be modified. Additionally, certain of the events may be performed concurrently in a parallel process when possible, as well as performed sequentially as described above.

## Claims

**1.** A method, comprising:

receiving input, via a processor, from each user from a plurality of users within an organization having an organizational purpose;
defining, via the processor and based on the input, a user purpose profile for each user from the plurality of users; and
connecting, for each user from the plurality of users, a representation of a purpose of that user and the organizational purpose, by:

comparing, via the processor and for each user from the plurality of users, (i) activity data associated with that user, and (ii) the user purpose profile associated with that user;
tracking, via the processor and based on the comparing, at least one of:

an individual purpose connection metric for each user from the plurality of users, or
an aggregated purpose connection metric for the plurality of users; and

repeatedly causing a signal representing at least one of the individual purpose connection metric for each user from the plurality of users or the aggregated purpose connection metric to be sent to a display of a compute device.

**2.** The method of claim 1, further comprising automatically retrieving, via the processor, in real time and via a telecommunications network, the activity data associated with each user from the plurality of users, the first activity data including data associated with at least one software application accessible via the telecommunications network.

**3.** The method of claim 1, further comprising calculating the individual purpose connection metric for each user from the plurality of users based on the comparing, each individual purpose connection metric being an inferred value that is not directly calculable based on the activity data of that user.

**4.** The method of claim 1, further comprising calculating the individual purpose connection metric for each user from the plurality of users based on the comparing, each individual purpose connection metric being an inferred value that is not directly calculable based on the user purpose profile of that user.

**5.** The method of claim 1, further comprising calculating the individual purpose connection metric for each user from the plurality of users based on the comparing, each individual purpose connection metric being an inferred value that is (i) not directly calculable based on the activity data of that user, and (ii) not directly calculable based on the user purpose profile of that user.

**6.** The method of claim 1, further comprising:

detecting, based on the tracking, that the individual purpose connection metric of a user from the plurality of users is below a predefined threshold; and
automatically causing display of an alert via the display of the compute device, in response to detecting that the individual purpose connection metric of the user from the plurality of users is below the predefined threshold.

**7.** The method of claim 1, further comprising:

detecting, based on the tracking, that the individual purpose connection metric of a user from the plurality of users is below a predefined threshold; and
automatically causing display of a user-selectable remediation object via the display of the compute device, in response to detecting that the individual purpose connection metric of the user from the plurality of users is below the predefined threshold.

**8.** The method of claim 1, further comprising:

identifying a task for a user from the plurality of users based on the tracking; and
automatically causing a notification to be sent to the display of the compute device, the notification including a recommendation that the user perform the task.

**9.** The method of claim 1, further comprising:

identifying a recommendation for a user from the plurality of users based on the tracking; and
automatically causing a signal to be sent to the display of the compute device, to cause display of a representation of the recommendation.

**10.** The method of claim 9, wherein the recommendation includes at least one of: a recommendation to reallocate time within a calendar of the user, a recommendation to add a new task to the calendar of the user, or a recommendation to remove an existing task from the calendar of the user.

**11.** The method of claim 1, wherein the receiving the input includes causing sequential display of a plurality of prompts to a first user from the plurality of users, a second prompt and each subsequent prompt from the plurality of prompts being based on a response, from a plurality of responses, received from the first user in response to a preceding prompt from the plurality of prompts.

**12.** The method of claim 11, wherein the sequential display is based on an engagement schema.

**13.** The method of claim 11, wherein the sequential display is based on a spanning tree algorithm.

**14.** The method of claim 1, wherein the tracking is performed continuously over time.

**15.** The method of claim 1, wherein the tracking is performed according to a predefined schedule.

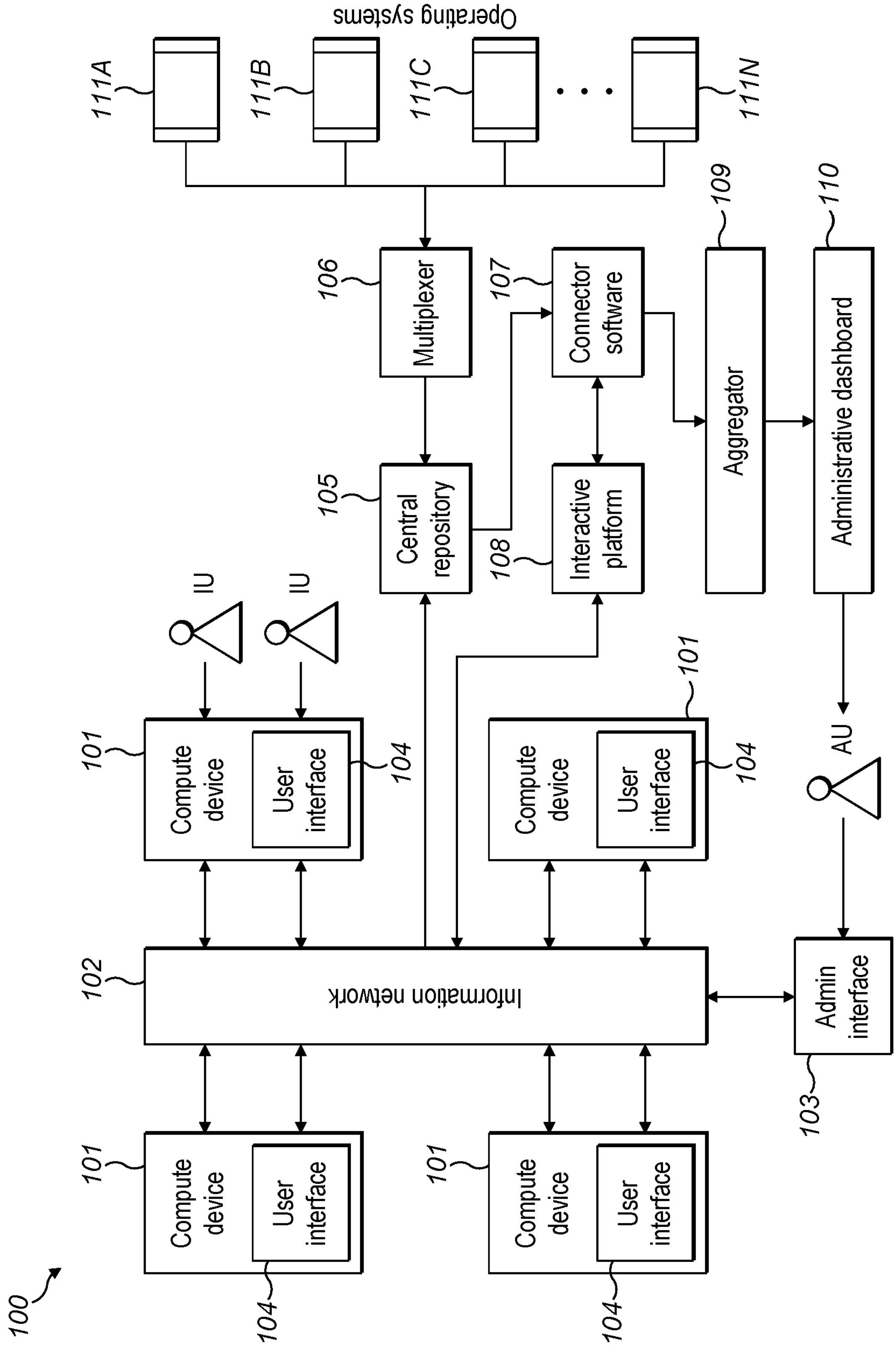
100
Operating systems
111A
111B
111C
111N
106
Multiplexer
107
Connector software
109
Aggregator
110
Administrative dashboard
105
Central repository
108
Interactive platform
IU
IU
101
Compute device
User interface
104
101
Compute device
User interface
104
101
Compute device
User interface
104
101
Compute device
User interface
104
102
Information network
AU
103
Admin interface

FIG. 1

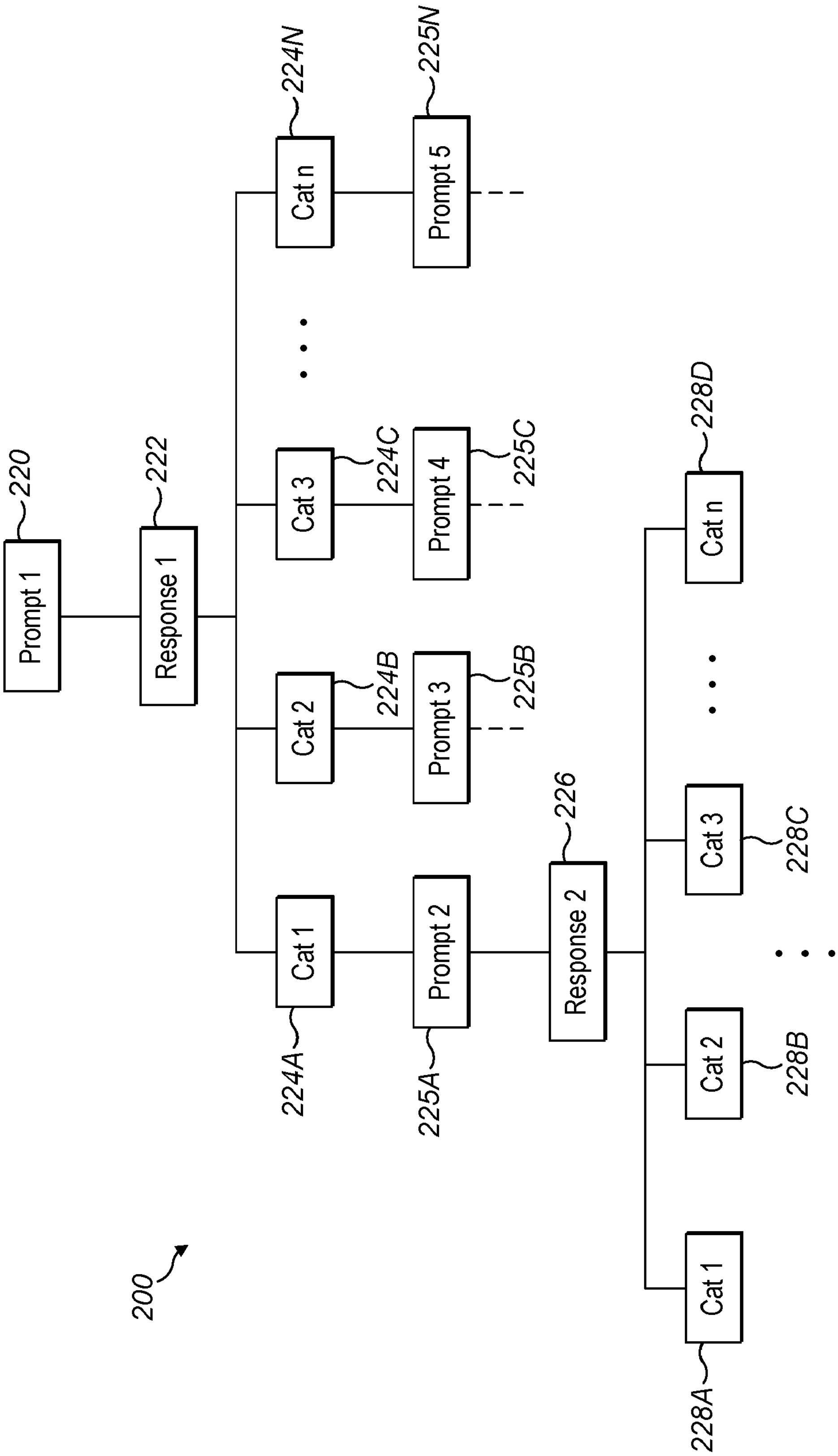
200
Prompt 1
220
Response 1
222
Cat 1
224A
Cat 2
224B
Cat 3
224C
Cat n
224N
Prompt 2
225A
Prompt 3
225B
Prompt 4
225C
Prompt 5
225N
Response 2
226
Cat 1
228A
Cat 2
228B
Cat 3
228C
Cat n
228D

FIG. 2

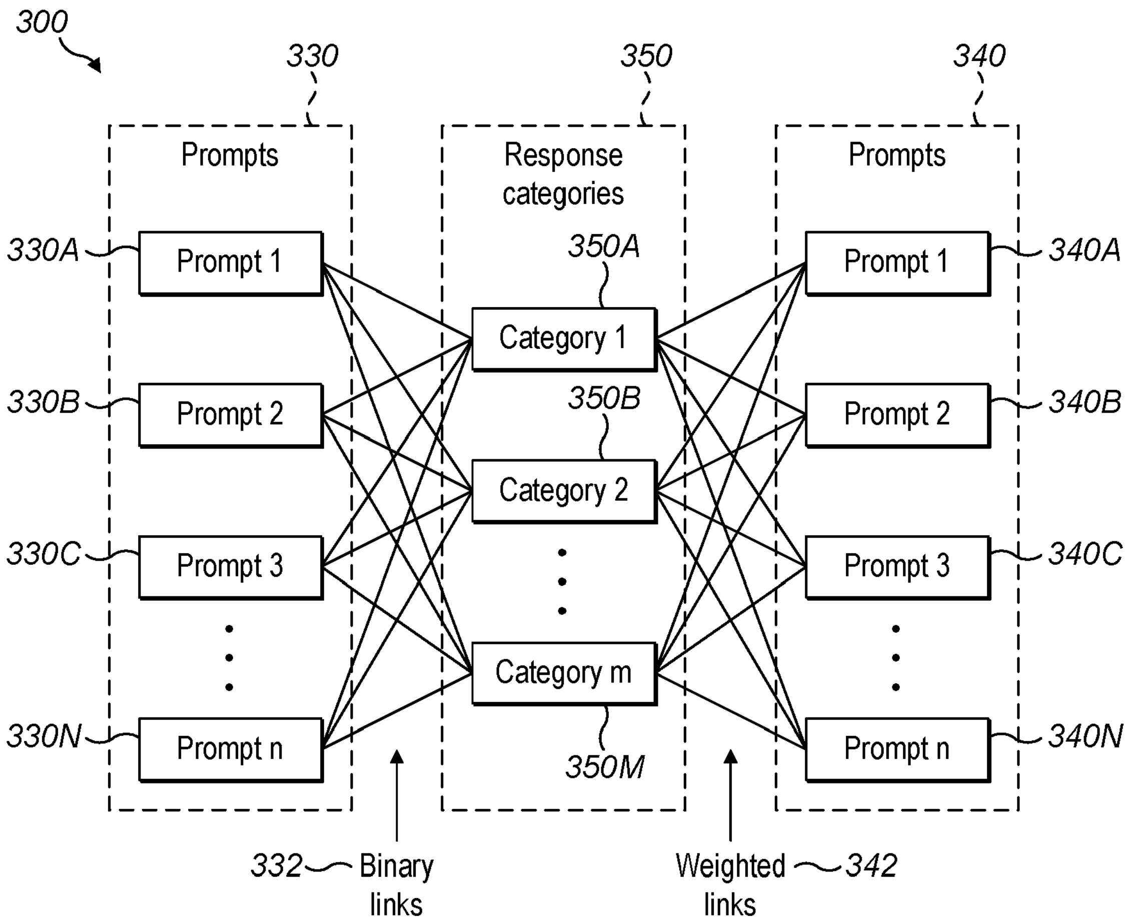
300
330
350
340
Prompts
Response categories
Prompts
330A
Prompt 1
350A
Category 1
Prompt 1
340A
330B
Prompt 2
350B
Category 2
Prompt 2
340B
330C
Prompt 3
Prompt 3
340C
Category m
330N
Prompt n
350M
Prompt n
340N
332
Binary links
Weighted links
342

FIG. 3

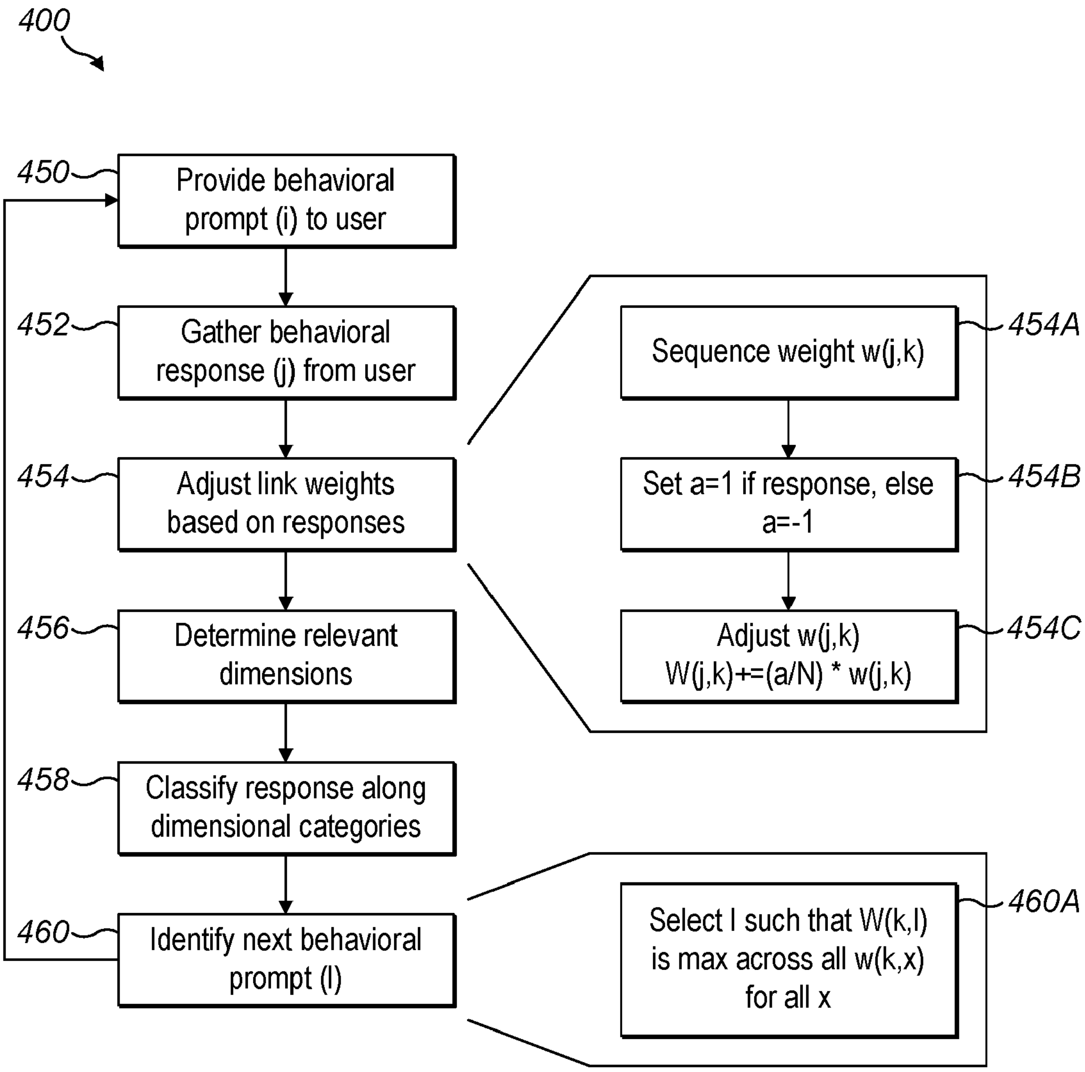
400
450
Provide behavioral prompt (i) to user
452
Gather behavioral response (j) from user
454
Adjust link weights based on responses
456
Determine relevant dimensions
458
Classify response along dimensional categories
460
Identify next behavioral prompt (l)
Sequence weight w(j,k)
454A
Set a=1 if response, else a=-1
454B
Adjust w(j,k)
W(j,k)+=(a/N) * w(j,k)
454C
Select l such that W(k,l) is max across all w(k,x) for all x
460A

FIG. 4

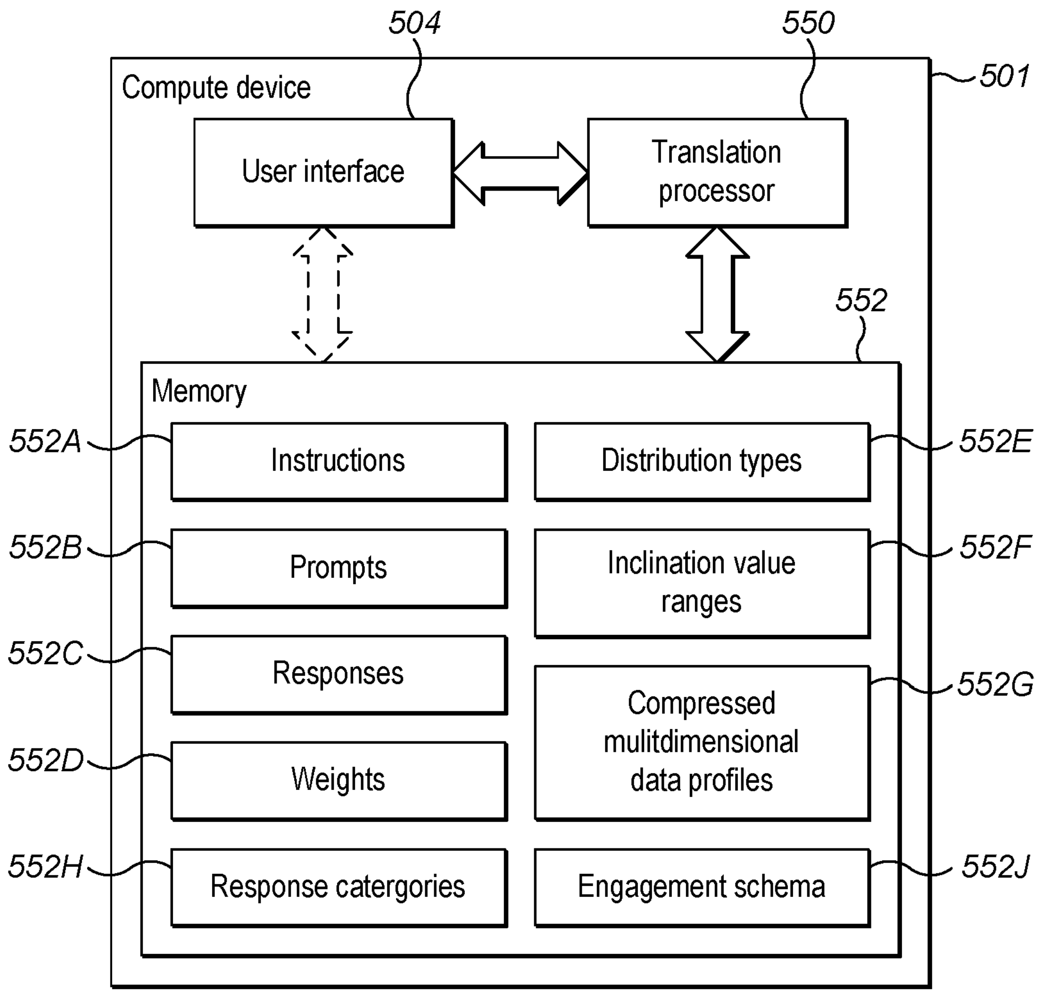
504
550
Compute device
501
User interface
Translation processor
552
Memory
552A
Instructions
Distribution types
552E
552B
Prompts
Inclination value ranges
552F
552C
Responses
Compressed mulitdimensional data profiles
552G
552D
Weights
552H
Response catergories
Engagement schema
552J

FIG. 5

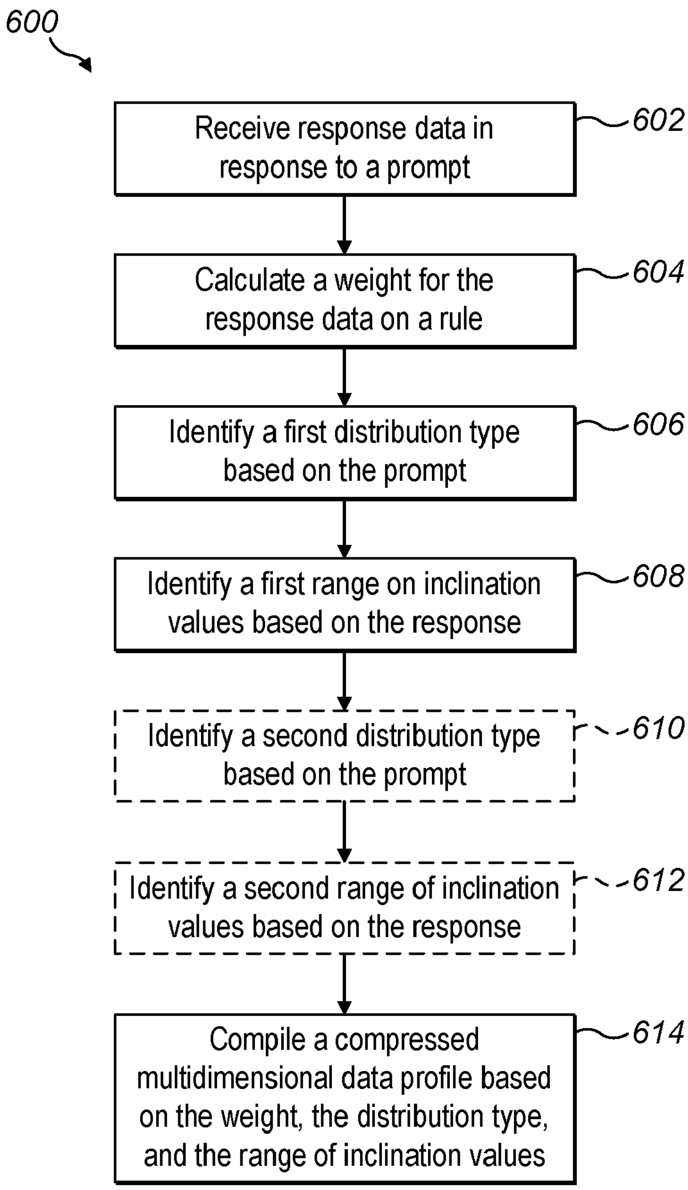
600
Receive response data in response to a prompt
602
Calculate a weight for the response data on a rule
604
Identify a first distribution type based on the prompt
606
Identify a first range on inclination values based on the response
608
Identify a second distribution type based on the prompt
610
Identify a second range of inclination values based on the response
612
Compile a compressed multidimensional data profile based on the weight, the distribution type, and the range of inclination values
614

FIG. 6

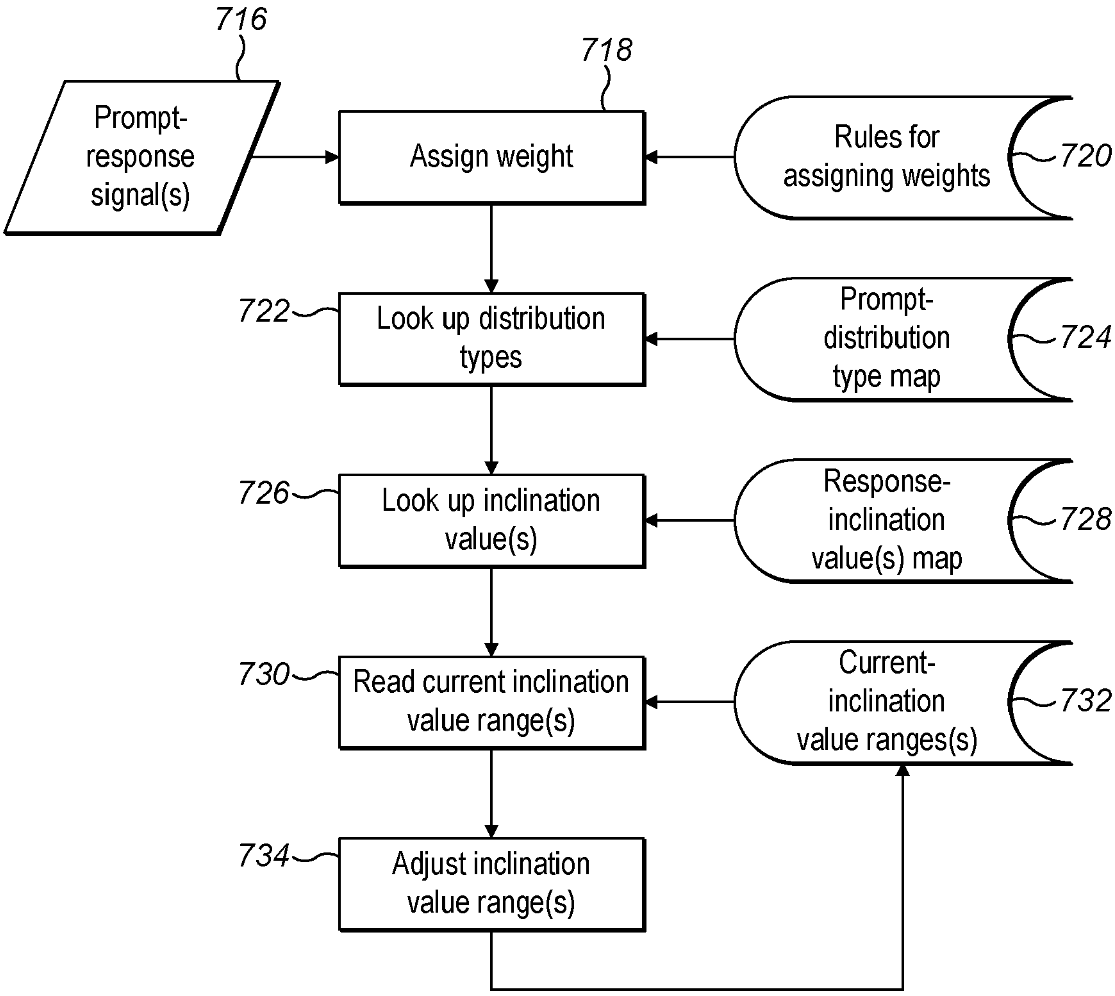
716
718
Prompt-response signal(s)
Assign weight
Rules for assigning weights
720
722
Look up distribution types
Prompt-distribution type map
724
726
Look up inclination value(s)
Response-inclination value(s) map
728
730
Read current inclination value range(s)
Current-inclination value ranges(s)
732
734
Adjust inclination value range(s)

FIG. 7

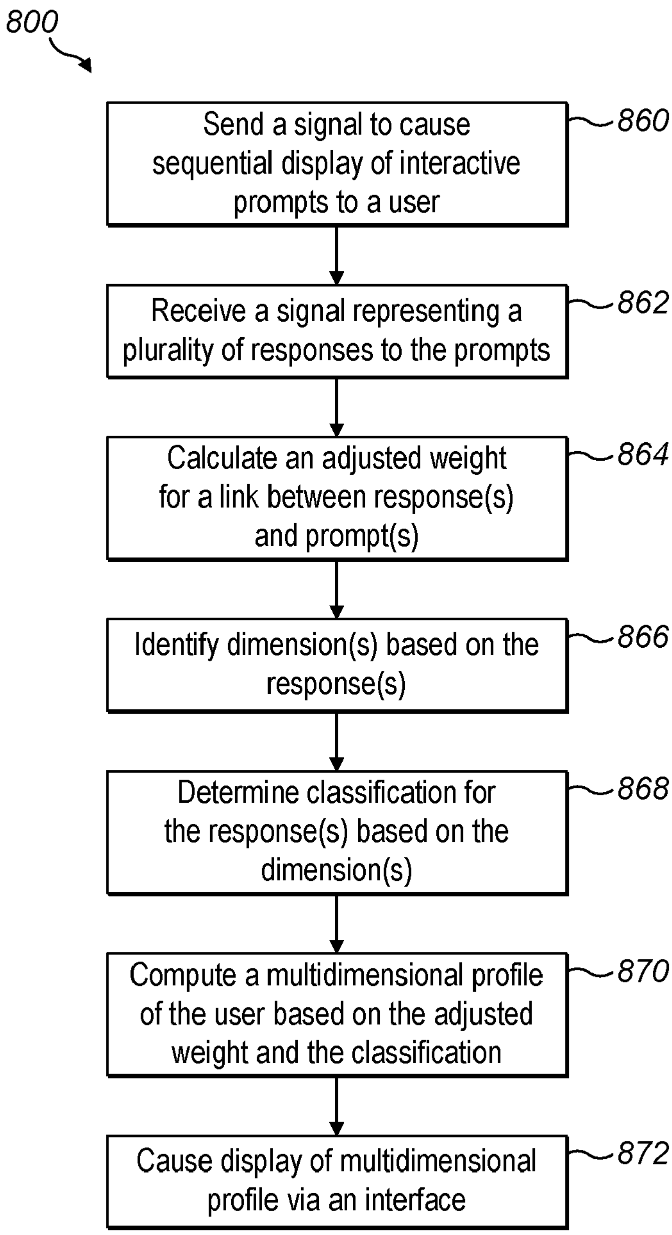
800
Send a signal to cause sequential display of interactive prompts to a user
860
Receive a signal representing a plurality of responses to the prompts
862
Calculate an adjusted weight for a link between response(s) and prompt(s)
864
Identify dimension(s) based on the response(s)
866
Determine classification for the response(s) based on the dimension(s)
868
Compute a multidimensional profile of the user based on the adjusted weight and the classification
870
Cause display of multidimensional profile via an interface
872

FIG. 8

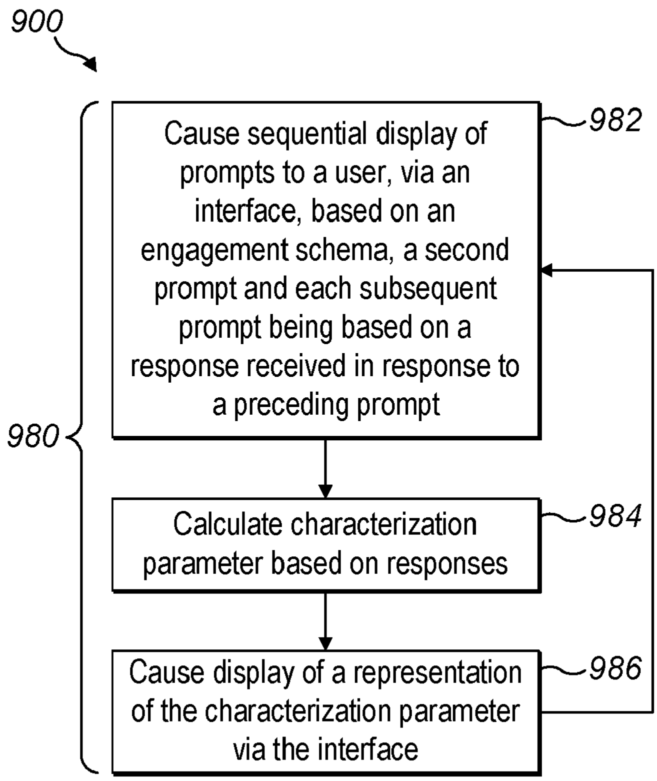
900
Cause sequential display of prompts to a user, via an interface, based on an engagement schema, a second prompt and each subsequent prompt being based on a response received in response to a preceding prompt
982
980
Calculate characterization parameter based on responses
984
Cause display of a representation of the characterization parameter via the interface
986

FIG. 9

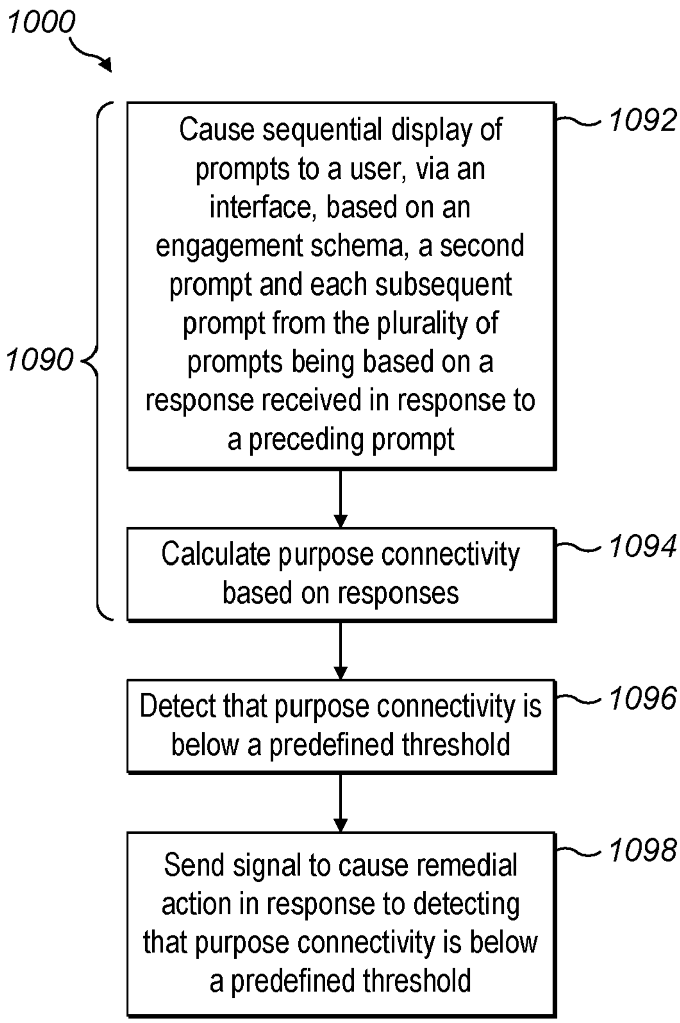
1000
1090
Cause sequential display of prompts to a user, via an interface, based on an engagement schema, a second prompt and each subsequent prompt from the plurality of prompts being based on a response received in response to a preceding prompt
1092
Calculate purpose connectivity based on responses
1094
Detect that purpose connectivity is below a predefined threshold
1096
Send signal to cause remedial action in response to detecting that purpose connectivity is below a predefined threshold
1098

FIG. 10

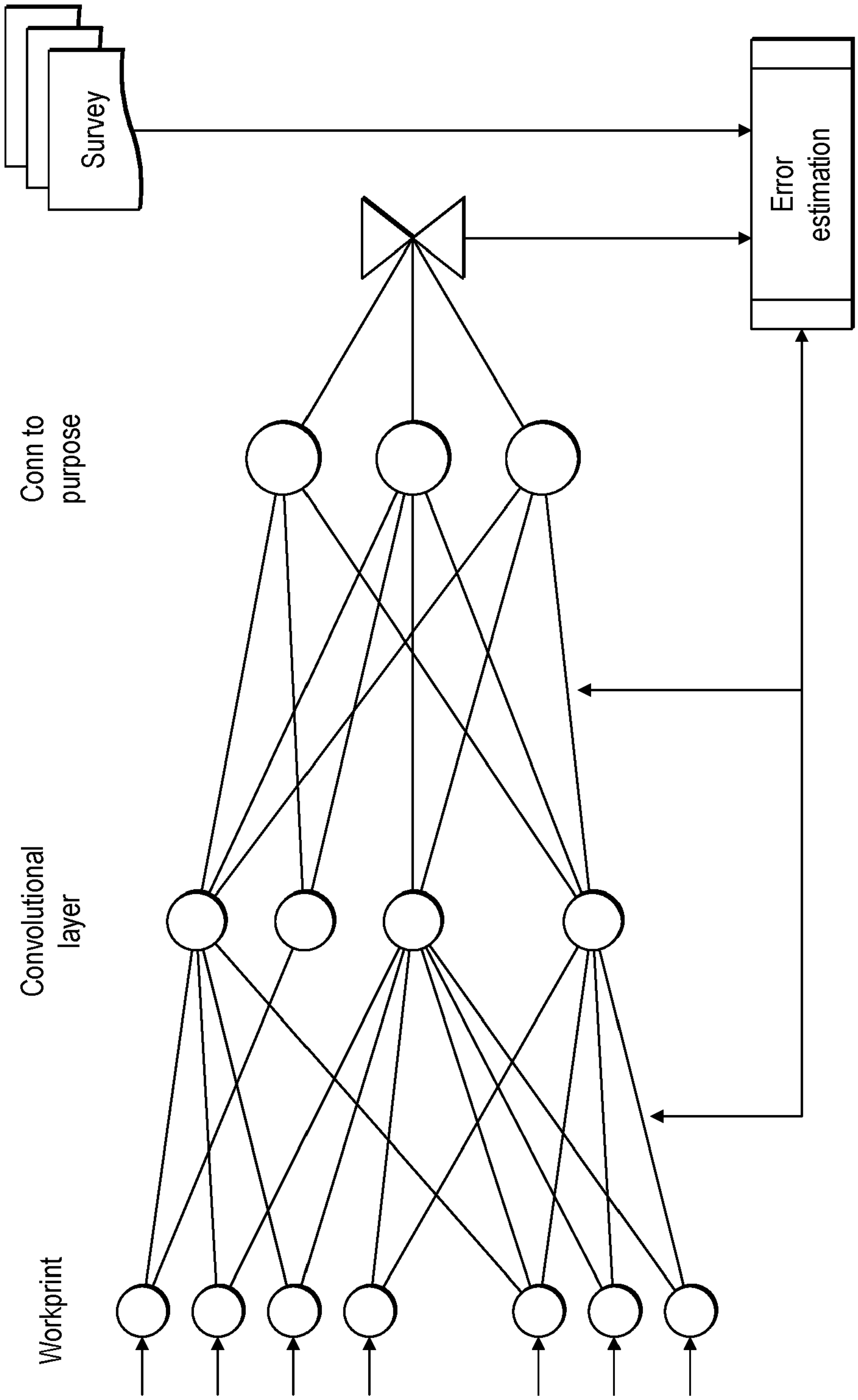
Survey
Error estimation
Conn to purpose
Convolutional layer
Workprint

FIG. 11

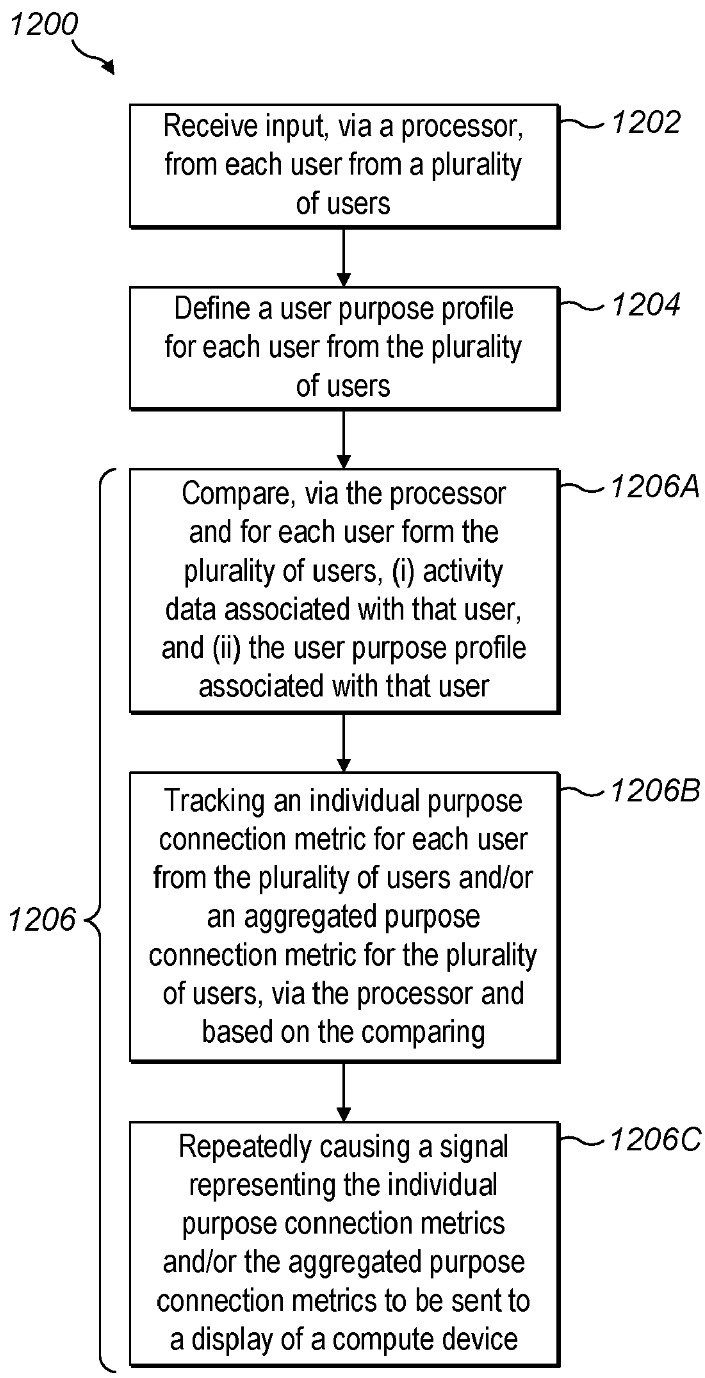
1200
Receive input, via a processor, from each user from a plurality of users
1202
Define a user purpose profile for each user from the plurality of users
1204
Compare, via the processor and for each user form the plurality of users, (i) activity data associated with that user, and (ii) the user purpose profile associated with that user
1206A
Tracking an individual purpose connection metric for each user from the plurality of users and/or an aggregated purpose connection metric for the plurality of users, via the processor and based on the comparing
1206B
1206
Repeatedly causing a signal representing the individual purpose connection metrics and/or the aggregated purpose connection metrics to be sent to a display of a compute device
1206C

FIG. 12

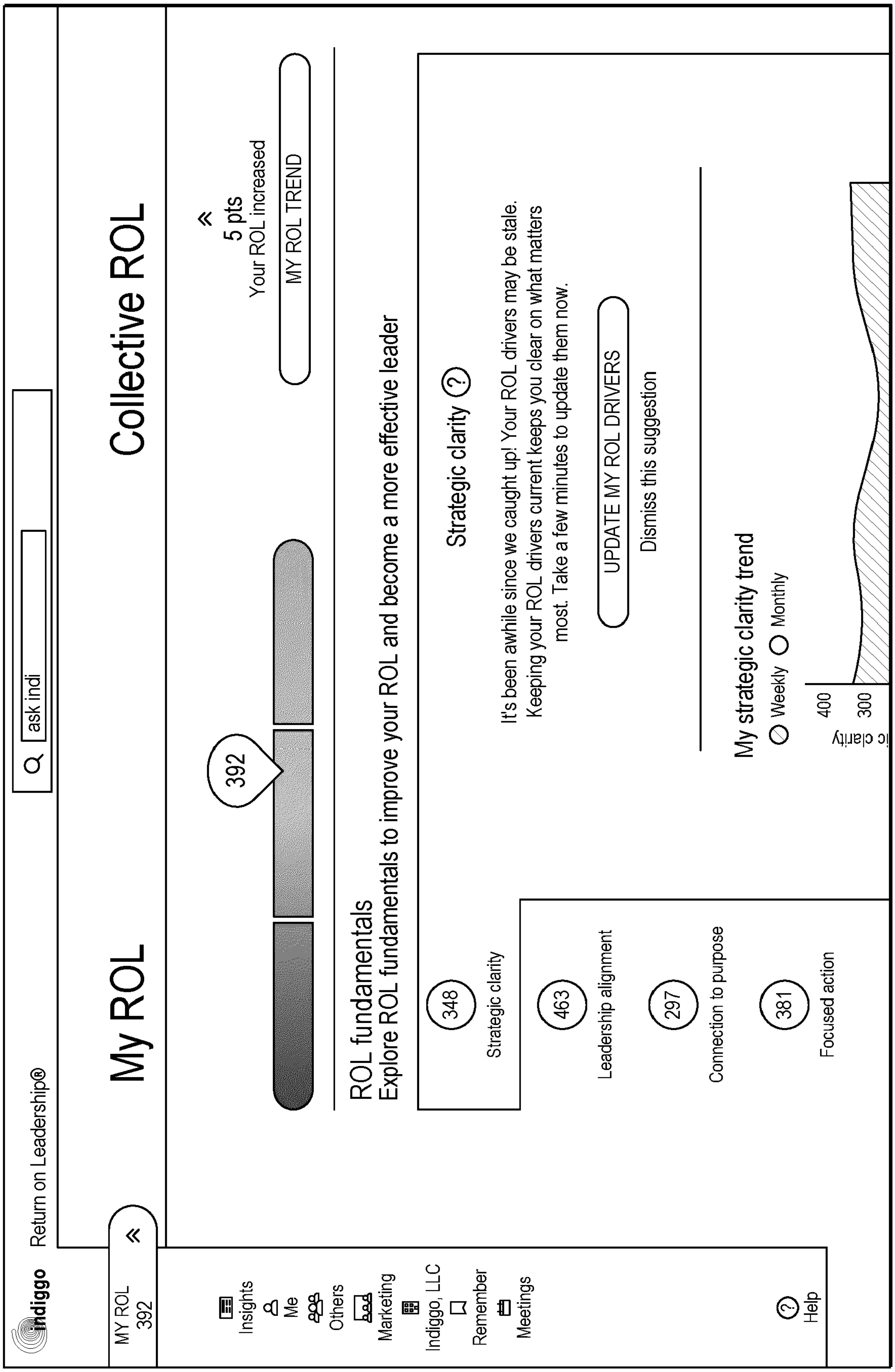
Indiggo
Return on Leadership®
ask indi
MY ROL
392
My ROL
392
Collective ROL
5 pts
Your ROL increased
MY ROL TREND
ROL fundamentals
Explore ROL fundamentals to improve your ROL and become a more effective leader
348
Strategic clarity
463
Leadership alignment
297
Connection to purpose
381
Focused action
Strategic clarity ?
It's been awhile since we caught up! Your ROL drivers may be stale.
Keeping your ROL drivers current keeps you clear on what matters
most. Take a few minutes to update them now.
UPDATE MY ROL DRIVERS
Dismiss this suggestion
My strategic clarity trend
Weekly
Monthly
400
300
Insights
Me
Others
Marketing
Indiggo, LLC
Remember
Meetings
Help

FIG. 13

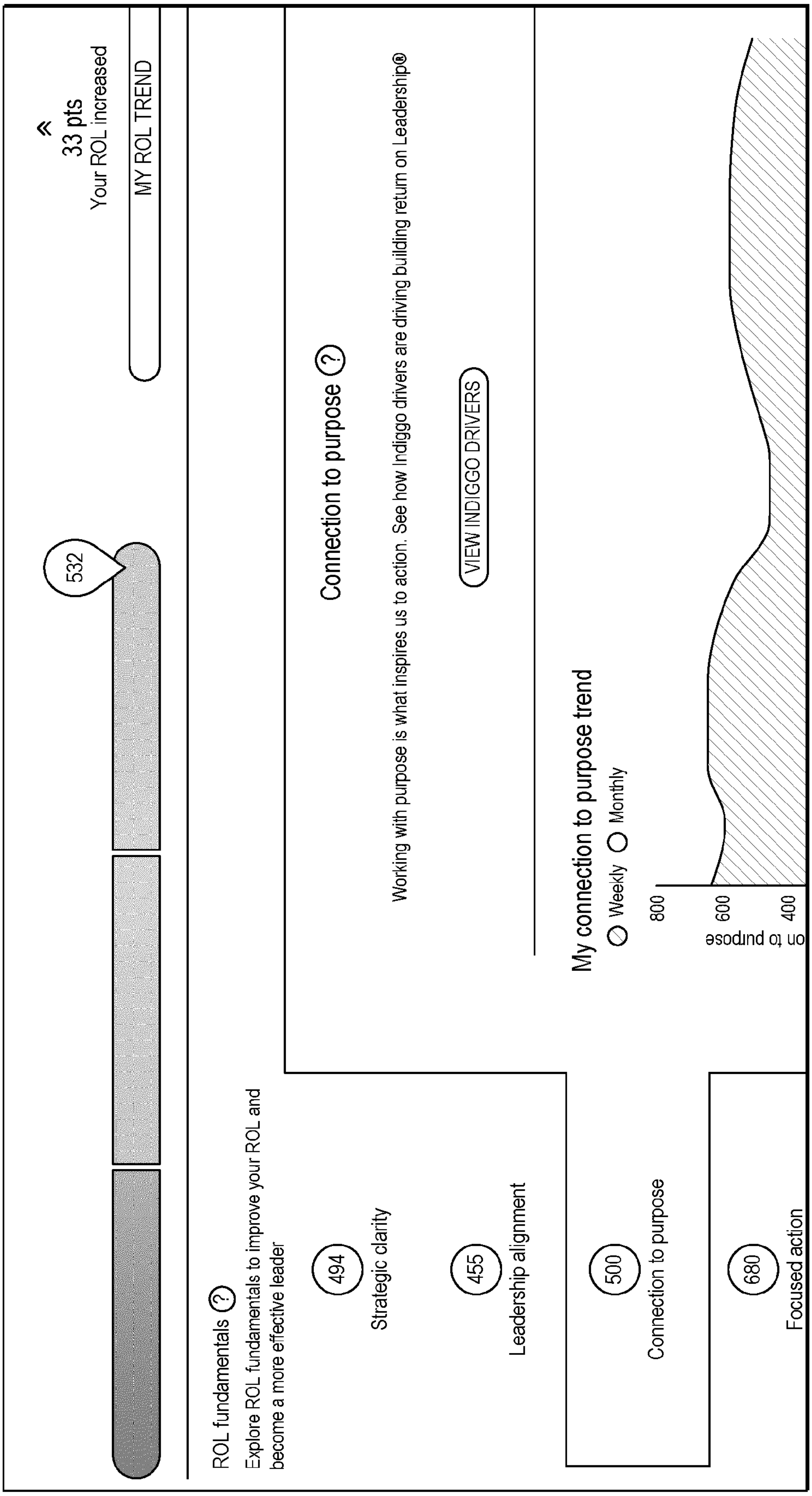

532
33 pts
Your ROL increased
MY ROL TREND
ROL fundamentals
Explore ROL fundamentals to improve your ROL and become a more effective leader
494
Strategic clarity
455
Leadership alignment
500
Connection to purpose
680
Focused action
Connection to purpose
Working with purpose is what inspires us to action. See how Indiggo drivers are driving building return on Leadership®
VIEW INDIGGO DRIVERS
My connection to purpose trend
Weekly
Monthly
800
600
400
on to purpose


FIG. 14

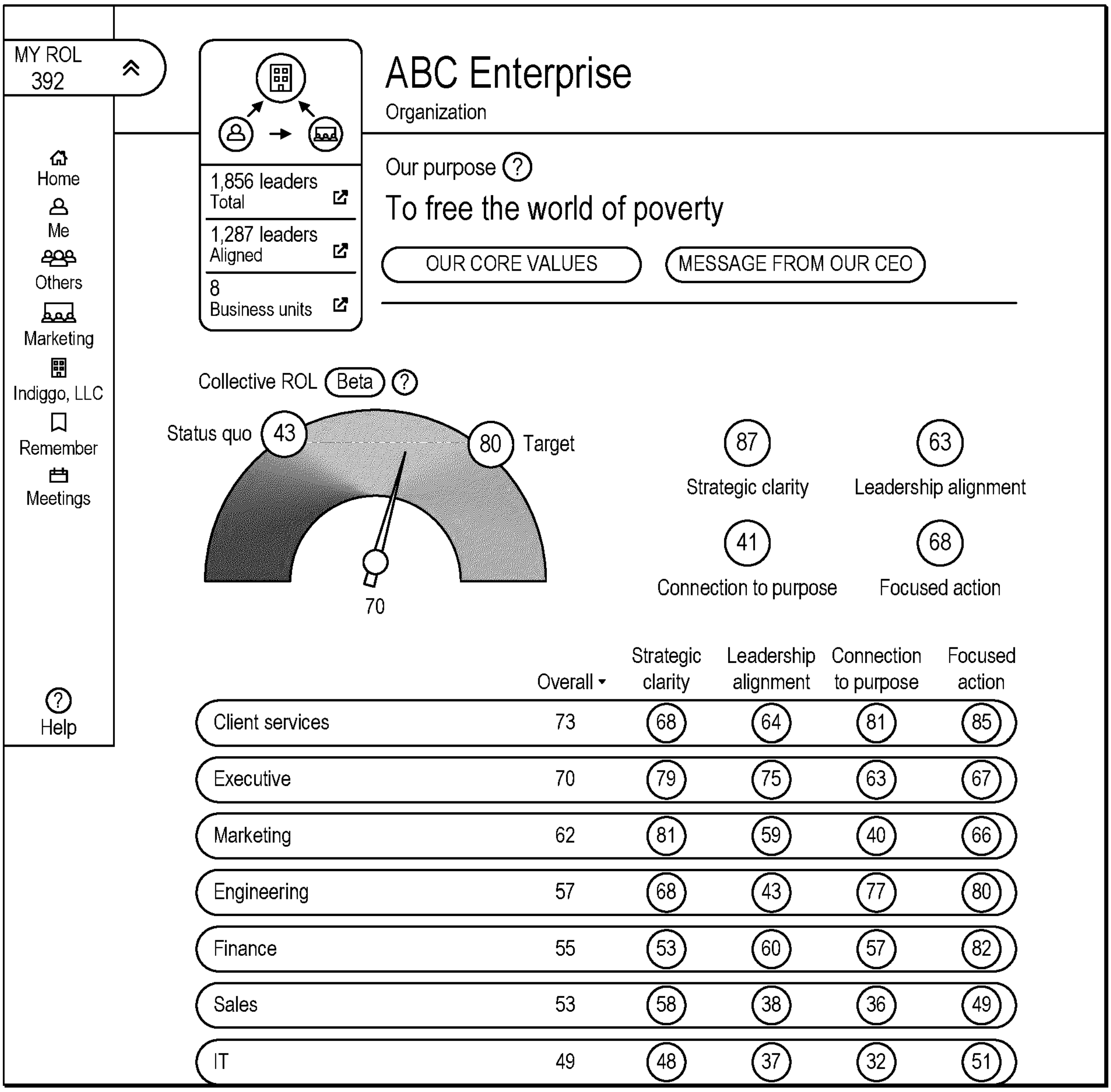
MY ROL
392
Home
Me
Others
Marketing
Indiggo, LLC
Remember
Meetings
Help
1,856 leaders
Total
1,287 leaders
Aligned
8
Business units
ABC Enterprise
Organization
Our purpose
To free the world of poverty
OUR CORE VALUES
MESSAGE FROM OUR CEO
Collective ROL
Beta
Status quo
43
80
Target
70
87
Strategic clarity
63
Leadership alignment
41
Connection to purpose
68
Focused action
Overall
Strategic clarity
Leadership alignment
Connection to purpose
Focused action
Client services 73 68 64 81 85
Executive 70 79 75 63 67
Marketing 62 81 59 40 66
Engineering 57 68 43 77 80
Finance 55 53 60 57 82
Sales 53 58 38 36 49
IT 49 48 37 32 51

FIG. 15

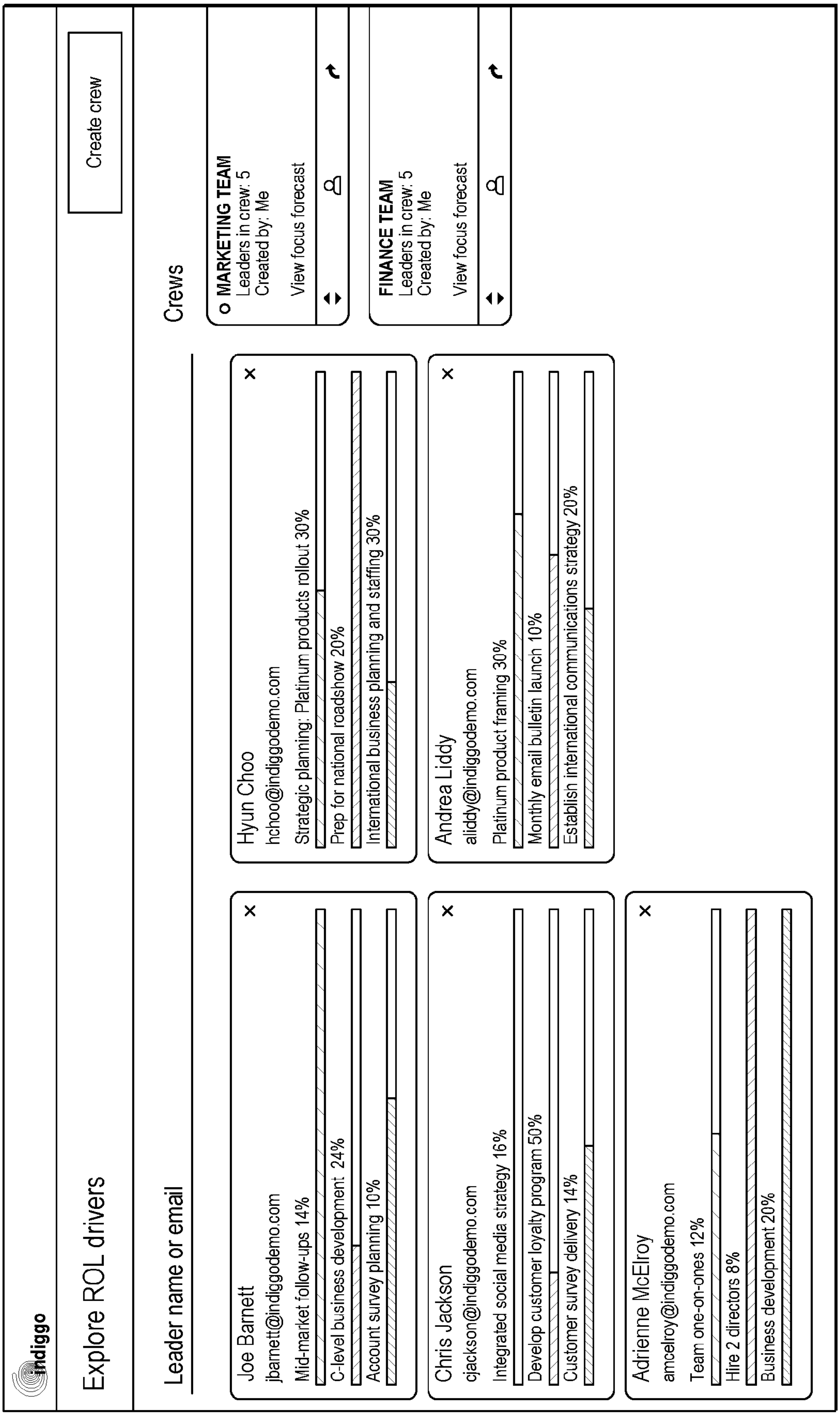
Indiggo
Explore ROL drivers
Create crew
Leader name or email
Crews
Joe Barnett
jbarnett@indiggodemo.com
Mid-market follow-ups 14%
C-level business development 24%
Account survey planning 10%
Hyun Choo
hchoo@indiggodemo.com
Strategic planning: Platinum products rollout 30%
Prep for national roadshow 20%
International business planning and staffing 30%
Chris Jackson
cjackson@indiggodemo.com
Integrated social media strategy 16%
Develop customer loyalty program 50%
Customer survey delivery 14%
Andrea Liddy
aliddy@indiggodemo.com
Platinum product framing 30%
Monthly email bulletin launch 10%
Establish international communications strategy 20%
Adrienne McElroy
amcelroy@indiggodemo.com
Team one-on-ones 12%
Hire 2 directors 8%
Business development 20%
MARKETING TEAM
Leaders in crew: 5
Created by: Me
View focus forecast
FINANCE TEAM
Leaders in crew: 5
Created by: Me
View focus forecast

*FIG. 16*

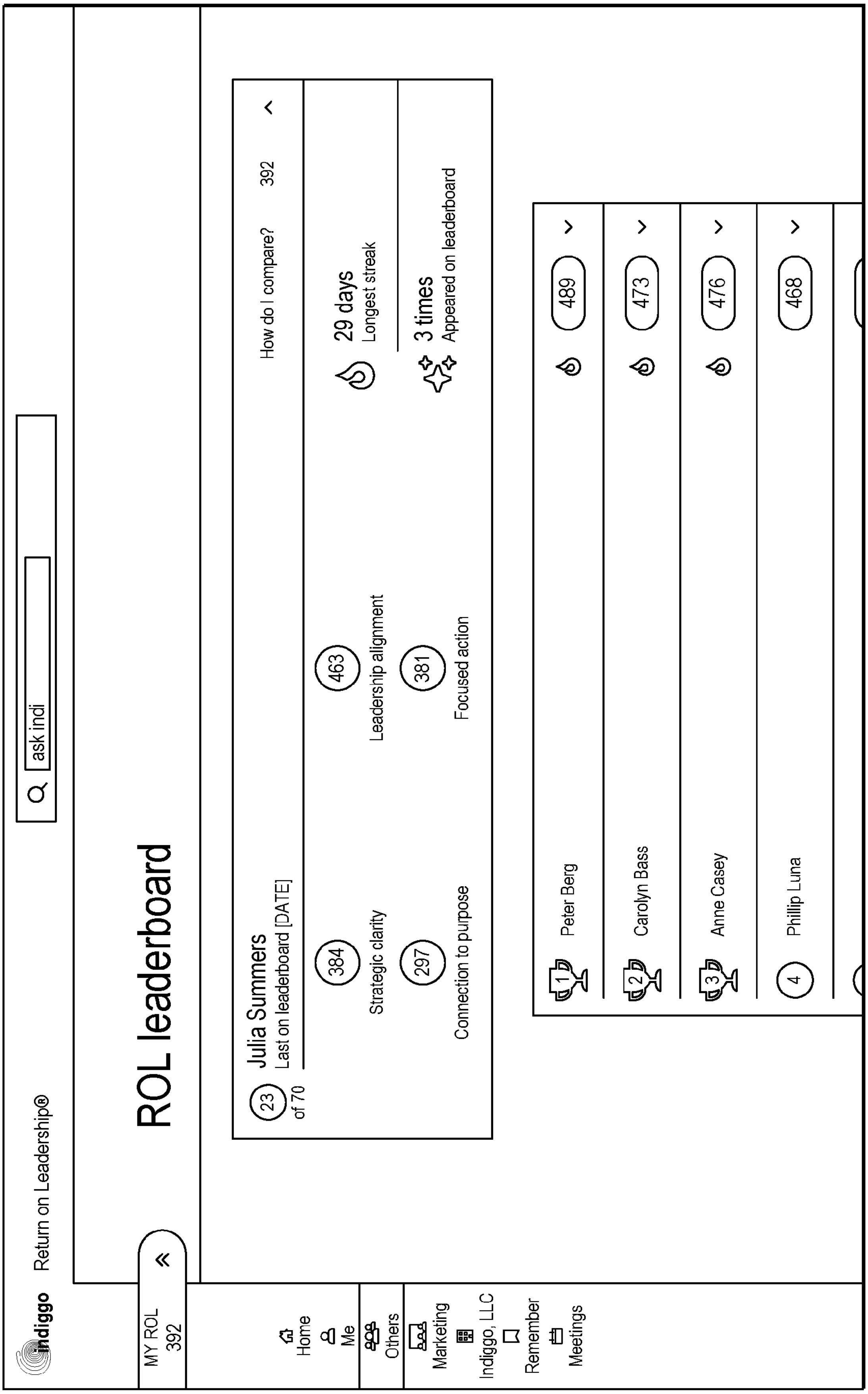

indiggo
Return on Leadership®
ask indi
MY ROL
392
ROL leaderboard
Home
Me
Others
Marketing
Indiggo, LLC
Remember
Meetings
23
of 70
Julia Summers
Last on leaderboard [DATE]
How do I compare?
392
384
Strategic clarity
463
Leadership alignment
297
Connection to purpose
381
Focused action
29 days
Longest streak
3 times
Appeared on leaderboard
1
Peter Berg
489
2
Carolyn Bass
473
3
Anne Casey
476
4
Phillip Luna
468


FIG. 17

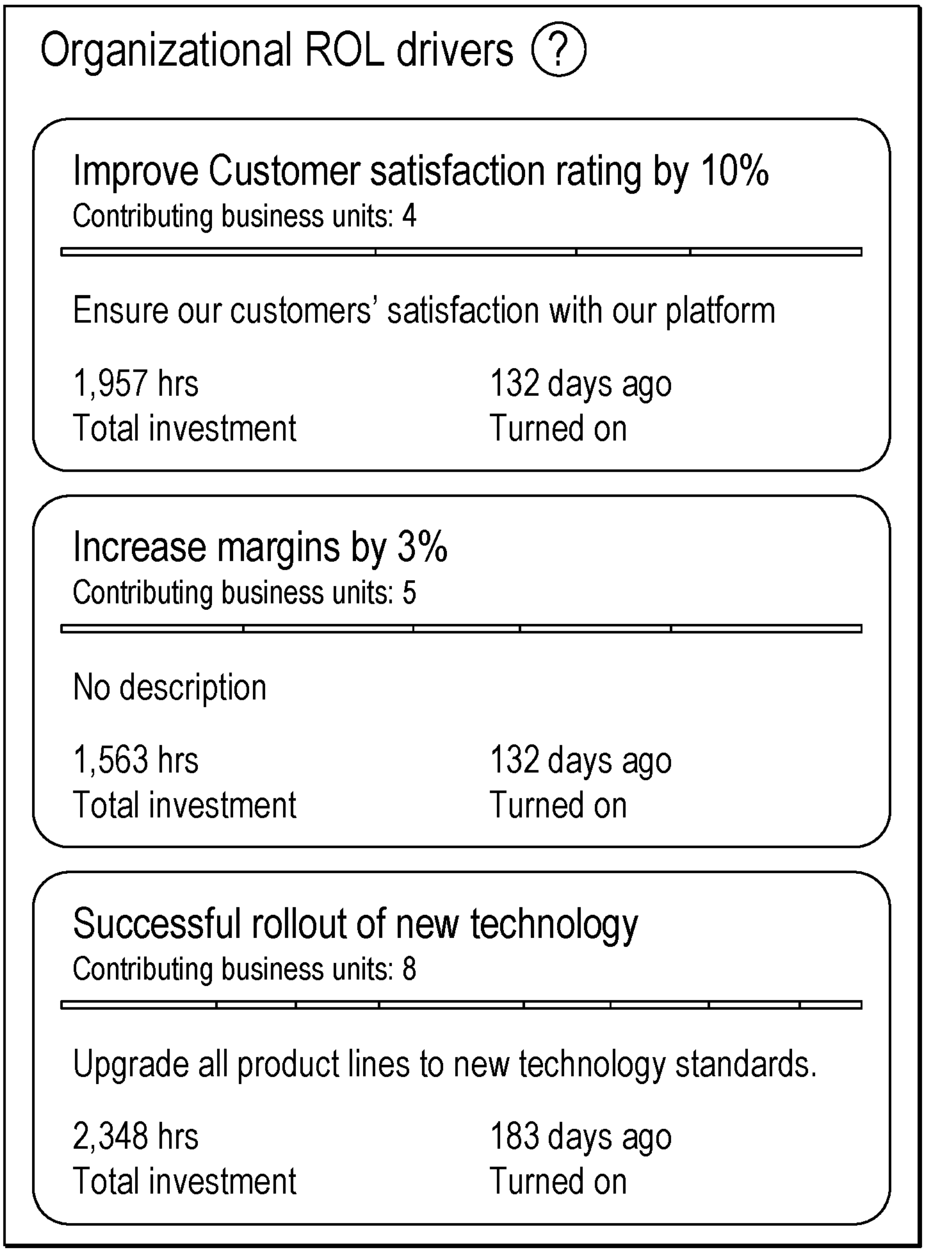
Organizational ROL drivers ?
Improve Customer satisfaction rating by 10%
Contributing business units: 4
Ensure our customers' satisfaction with our platform
1,957 hrs
Total investment
132 days ago
Turned on
Increase margins by 3%
Contributing business units: 5
No description
1,563 hrs
Total investment
132 days ago
Turned on
Successful rollout of new technology
Contributing business units: 8
Upgrade all product lines to new technology standards.
2,348 hrs
Total investment
183 days ago
Turned on

FIG. 18

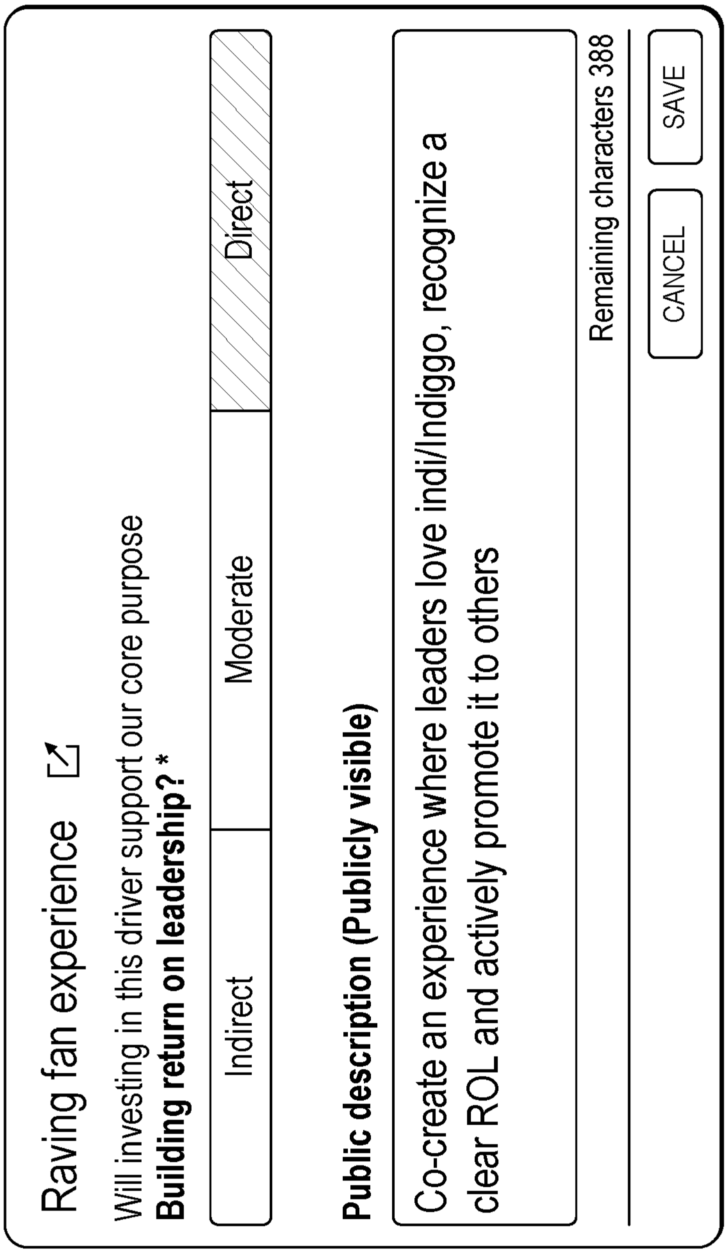
Raving fan experience
Will investing in this driver support our core purpose
Building return on leadership? *
Indirect
Moderate
Direct
Public description (Publicly visible)
Co-create an experience where leaders love indi/Indiggo, recognize a clear ROL and actively promote it to others
Remaining characters 388
CANCEL
SAVE

FIG. 19

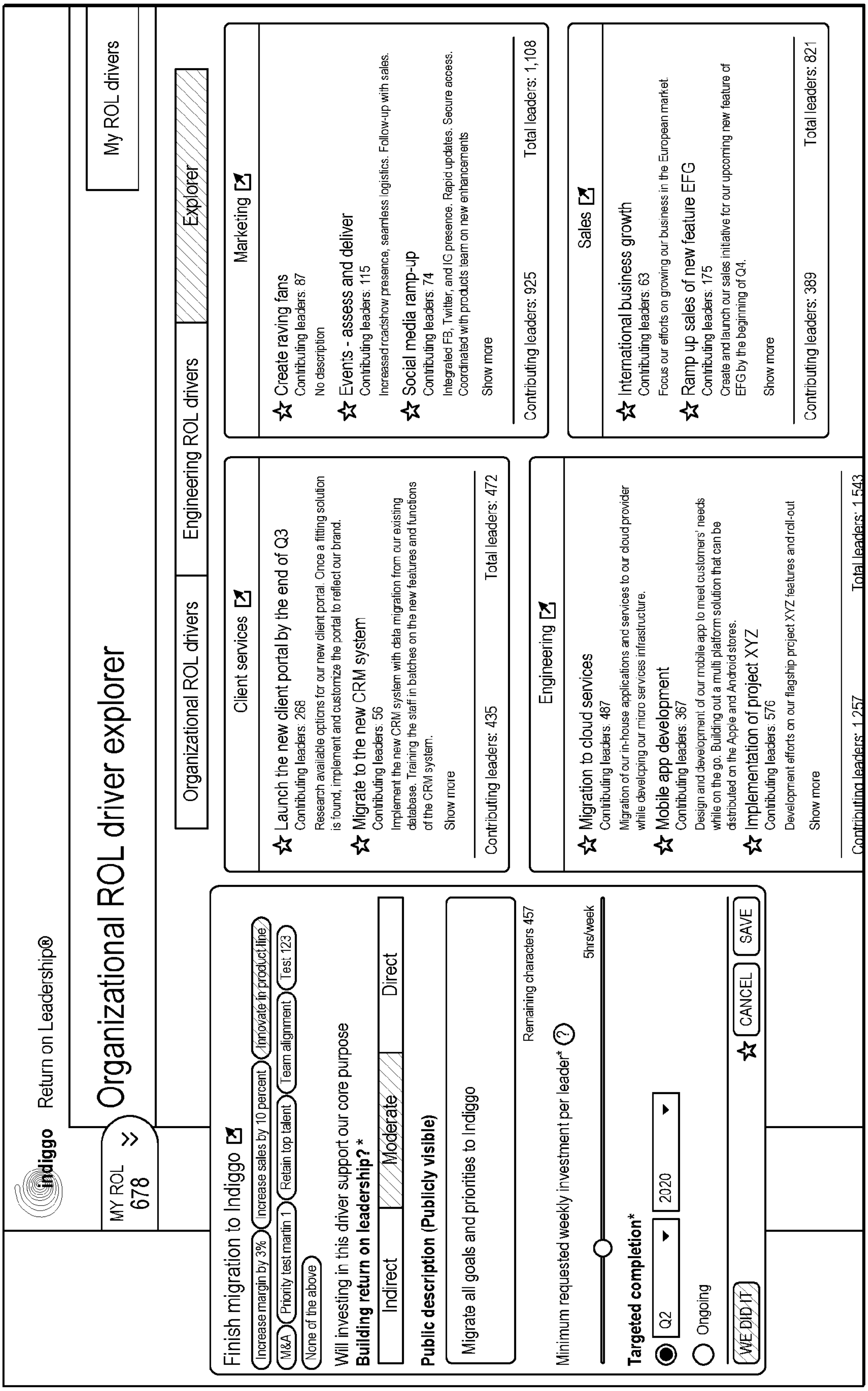
Indiggo Return on Leadership®
MY ROL 678
Organizational ROL driver explorer
My ROL drivers
Organizational ROL drivers
Engineering ROL drivers
Explorer
Finish migration to Indiggo
Increase margin by 3%
Increase sales by 10 percent
Innovate in product line
M&A
Priority test martin 1
Retain top talent
Team alignment
Test 123
None of the above
Will investing in this driver support our core purpose
Building return on leadership? *
Indirect
Moderate
Direct
Public description (Publicly visible)
Migrate all goals and priorities to Indiggo
Remaining characters 457
Minimum requested weekly investment per leader* ?
5hrs/week
Targeted completion*
Q2
2020
Ongoing
WE DID IT
CANCEL
SAVE
Client services
Launch the new client portal by the end of Q3
Contributing leaders: 268
Research available options for our new client portal. Once a fitting solution is found, implement and customize the portal to reflect our brand.
Migrate to the new CRM system
Contributing leaders: 56
Implement the new CRM system with data migration from our existing database. Training the staff in batches on the new features and functions of the CRM system.
Show more
Contributing leaders: 435
Total leaders: 472
Marketing
Create raving fans
Contributing leaders: 87
No description
Events - assess and deliver
Contributing leaders: 115
Increased roadshow presence, seamless logistics. Follow-up with sales.
Social media ramp-up
Contributing leaders: 74
Integrated FB, Twitter, and IG presence. Rapid updates. Secure access. Coordinated with products team on new enhancements
Show more
Contributing leaders: 925
Total leaders: 1,108
Engineering
Migration to cloud services
Contributing leaders: 487
Migration of our in-house applications and services to our cloud provider while developing our micro services infrastructure.
Mobile app development
Contributing leaders: 367
Design and development of our mobile app to meet customers' needs while on the go. Building out a multi platform solution that can be distributed on the Apple and Android stores.
Implementation of project XYZ
Contributing leaders: 576
Development efforts on our flagship project XYZ features and roll-out
Show more
Contributing leaders: 1,257
Total leaders: 1,543
Sales
International business growth
Contributing leaders: 63
Focus our efforts on growing our business in the European market.
Ramp up sales of new feature EFG
Contributing leaders: 175
Create and launch our sales initiative for our upcoming new feature of EFG by the beginning of Q4.
Show more
Contributing leaders: 389
Total leaders: 821

FIG. 20

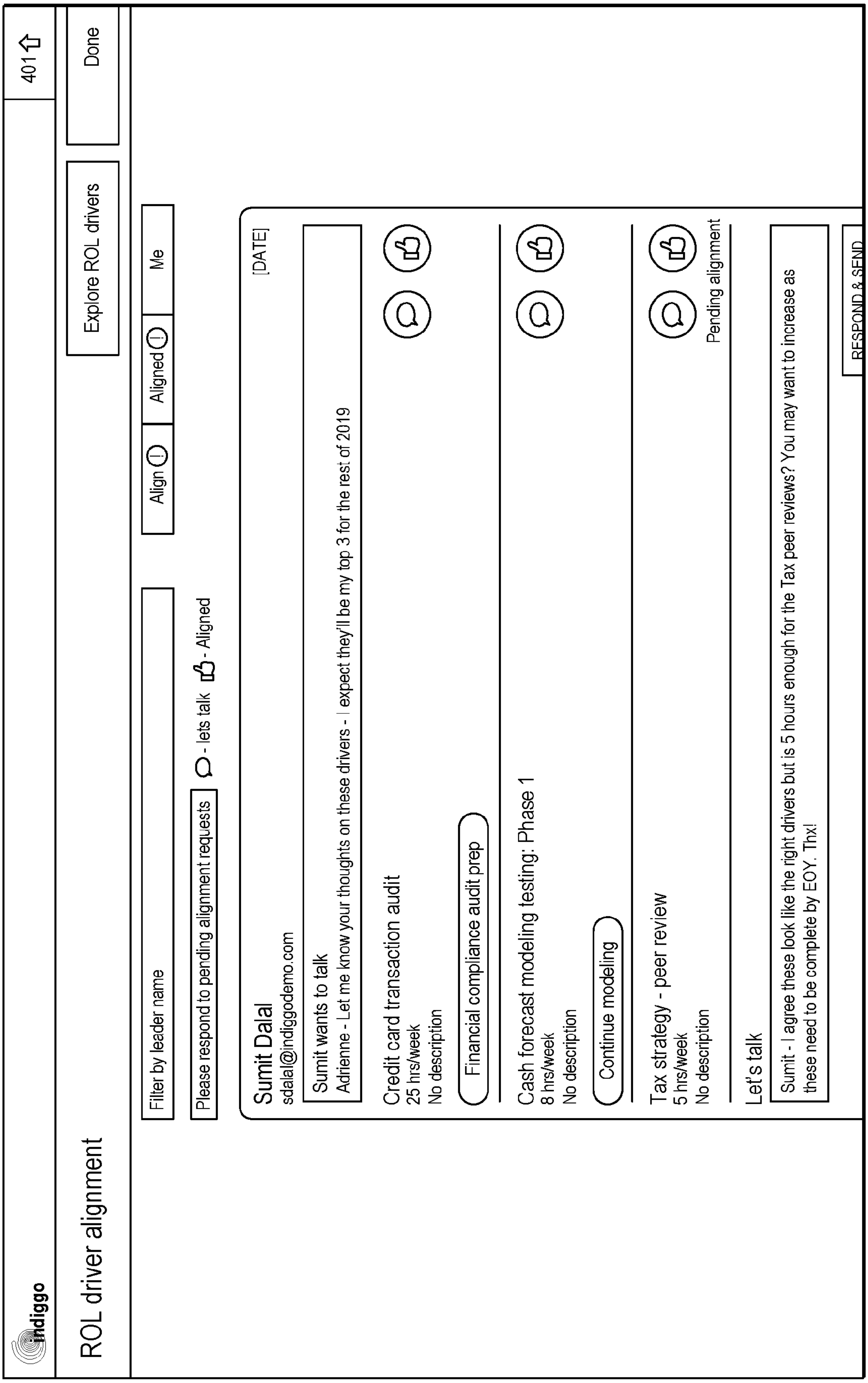
indiggo
ROL driver alignment
401
Explore ROL drivers
Done
Filter by leader name
Align !
Aligned !
Me
Please respond to pending alignment requests
- lets talk
- Aligned
Sumit Dalal
sdalal@indiggodemo.com
[DATE]
Sumit wants to talk
Adrienne - Let me know your thoughts on these drivers - I expect they'll be my top 3 for the rest of 2019
Credit card transaction audit
25 hrs/week
No description
Financial compliance audit prep
Cash forecast modeling testing: Phase 1
8 hrs/week
No description
Continue modeling
Tax strategy - peer review
5 hrs/week
No description
Pending alignment
Let's talk
Sumit - I agree these look like the right drivers but is 5 hours enough for the Tax peer reviews? You may want to increase as these need to be complete by EOY. Thx!
RESPOND & SEND

FIG. 21

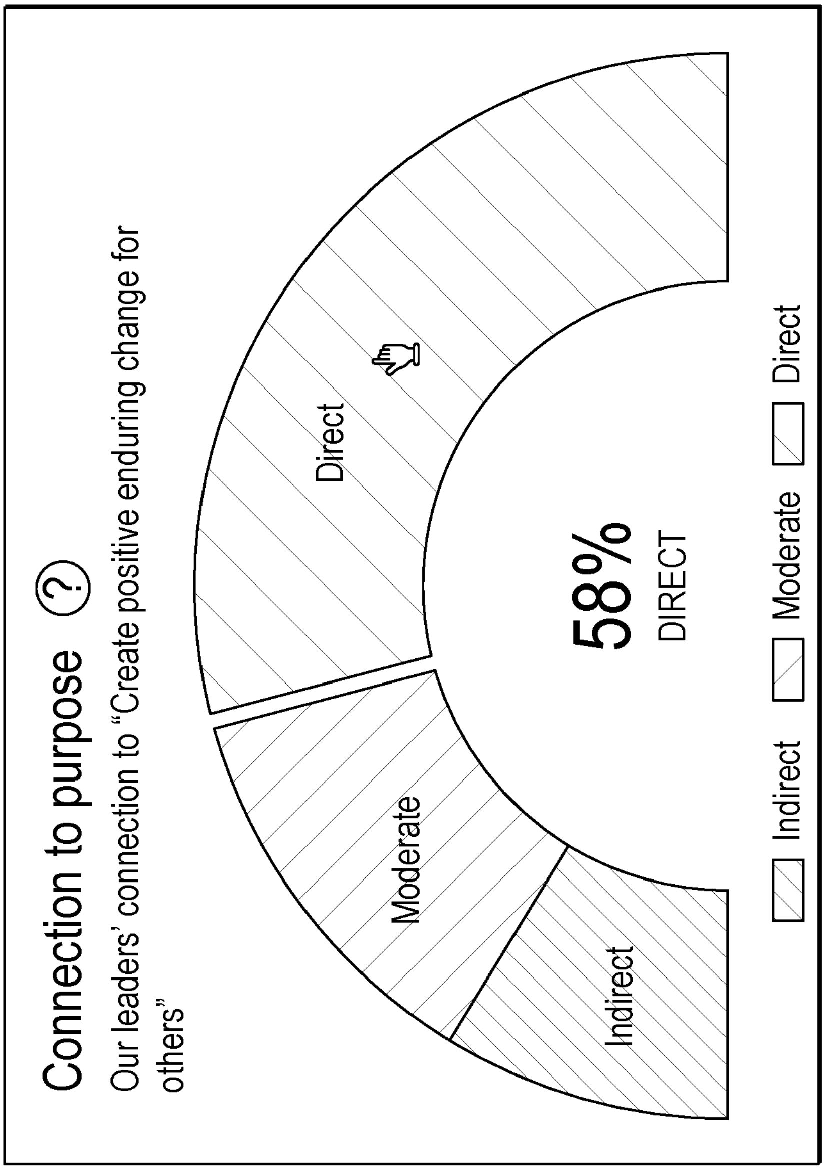
Connection to purpose ?
Our leaders' connection to "Create positive enduring change for others"
Indirect
Moderate
Direct
58%
DIRECT
Indirect
Moderate
Direct

*FIG. 22*

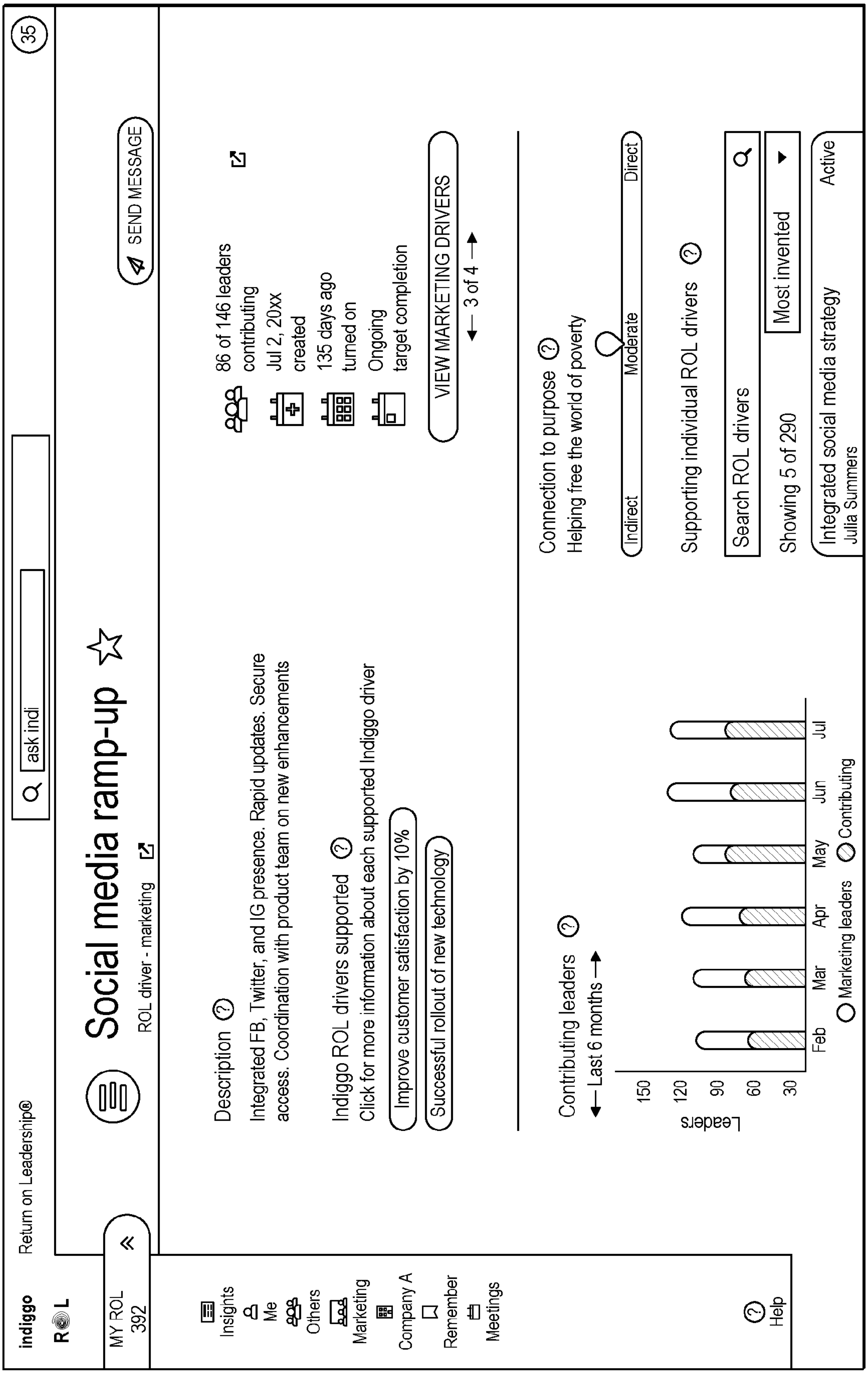

indiggo
R L
Return on Leadership®
ask indi
35
MY ROL
392
Insights
Me
Others
Marketing
Company A
Remember
Meetings
Help
Social media ramp-up
ROL driver - marketing
SEND MESSAGE
Description
Integrated FB, Twitter, and IG presence. Rapid updates. Secure access. Coordination with product team on new enhancements
86 of 146 leaders contributing
Jul 2, 20xx created
135 days ago turned on
Ongoing target completion
Indiggo ROL drivers supported
Click for more information about each supported Indiggo driver
Improve customer satisfaction by 10%
Successful rollout of new technology
VIEW MARKETING DRIVERS
3 of 4
Contributing leaders
Last 6 months
Leaders
150
120
90
60
30
Feb
Mar
Apr
May
Jun
Jul
Marketing leaders
Contributing
Connection to purpose
Helping free the world of poverty
Indirect
Moderate
Direct
Supporting individual ROL drivers
Search ROL drivers
Showing 5 of 290
Most invented
Integrated social media strategy
Julia Summers
Active


*FIG. 23*

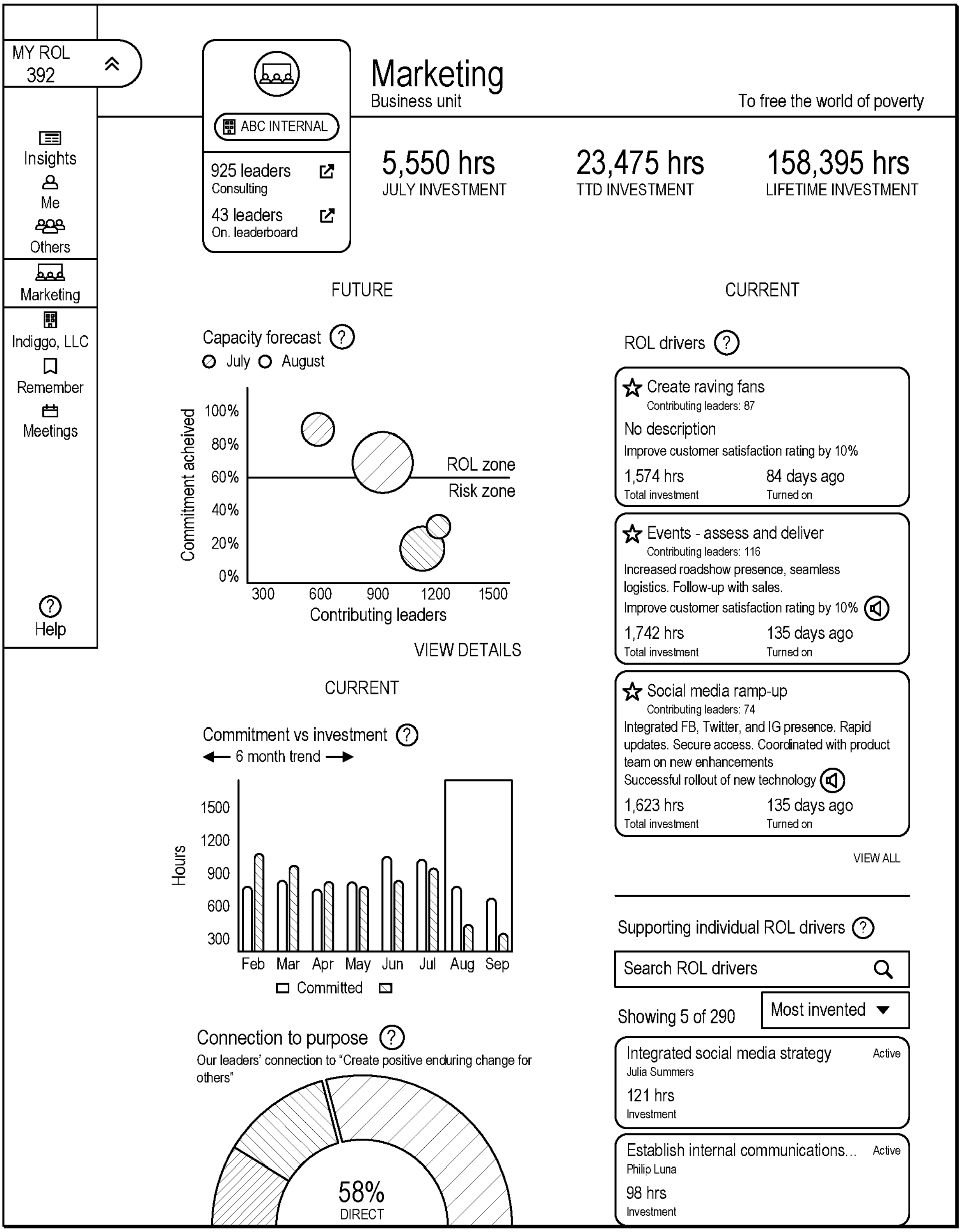
MY ROL
392
Insights
Me
Others
Marketing
Indiggo, LLC
Remember
Meetings
Help
ABC INTERNAL
925 leaders
Consulting
43 leaders
On. leaderboard
Marketing
Business unit
To free the world of poverty
5,550 hrs
JULY INVESTMENT
23,475 hrs
TTD INVESTMENT
158,395 hrs
LIFETIME INVESTMENT
FUTURE
Capacity forecast
July August
Commitment acheived
100%
80%
60%
40%
20%
0%
300 600 900 1200 1500
Contributing leaders
ROL zone
Risk zone
VIEW DETAILS
CURRENT
Commitment vs investment
6 month trend
Hours
1500
1200
900
600
300
Feb Mar Apr May Jun Jul Aug Sep
Committed
Connection to purpose
Our leaders' connection to "Create positive enduring change for others"
58%
DIRECT
CURRENT
ROL drivers
Create raving fans
Contributing leaders: 87
No description
Improve customer satisfaction rating by 10%
1,574 hrs
Total investment
84 days ago
Turned on
Events - assess and deliver
Contributing leaders: 116
Increased roadshow presence, seamless logistics. Follow-up with sales.
Improve customer satisfaction rating by 10%
1,742 hrs
Total investment
135 days ago
Turned on
Social media ramp-up
Contributing leaders: 74
Integrated FB, Twitter, and IG presence. Rapid updates. Secure access. Coordinated with product team on new enhancements
Successful rollout of new technology
1,623 hrs
Total investment
135 days ago
Turned on
VIEW ALL
Supporting individual ROL drivers
Search ROL drivers
Showing 5 of 290
Most invented
Integrated social media strategy
Active
Julia Summers
121 hrs
Investment
Establish internal communications...
Active
Philip Luna
98 hrs
Investment

*FIG. 24*

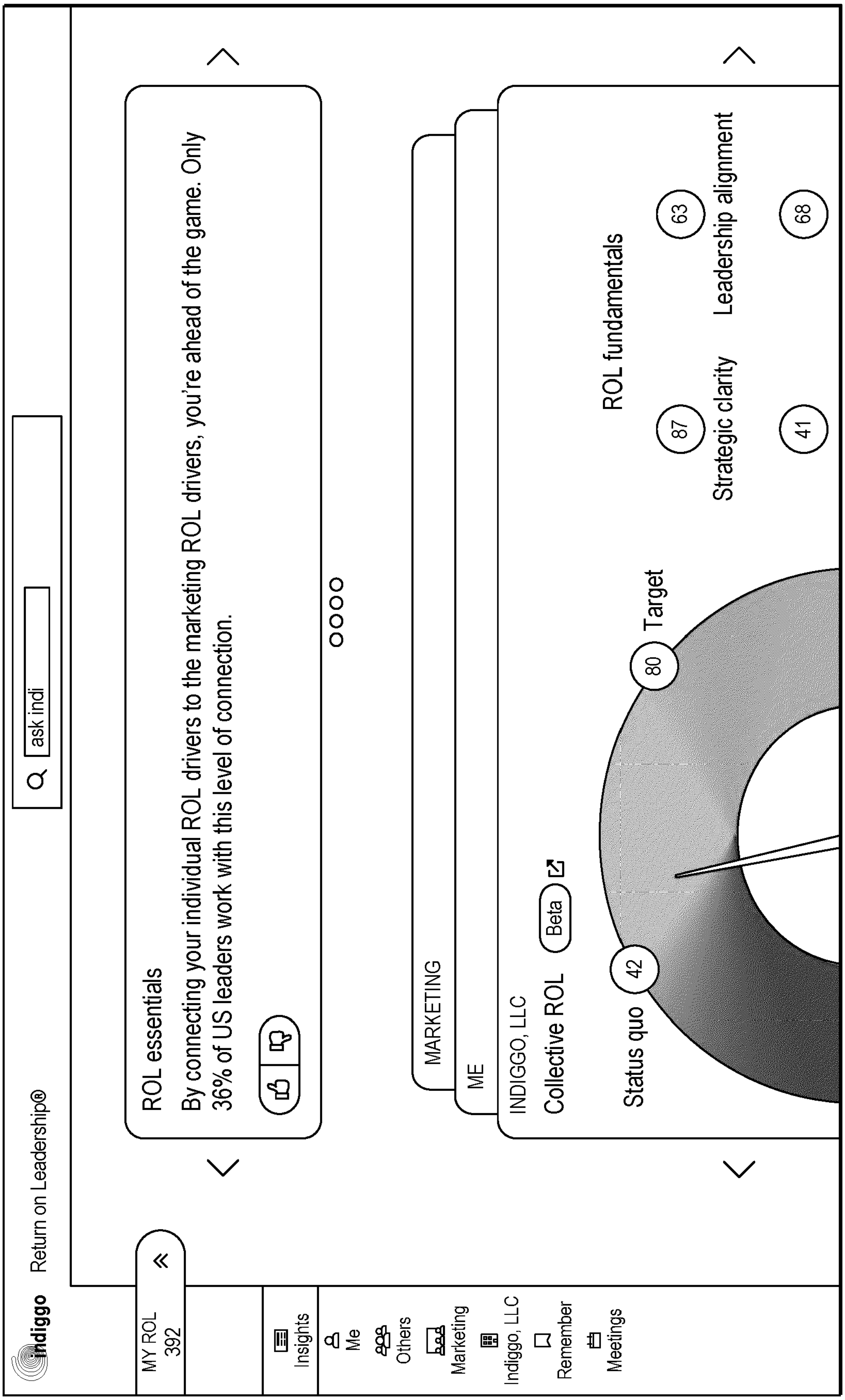
indiggo
Return on Leadership®
ask indi
MY ROL
392
Insights
Me
Others
Marketing
Indiggo, LLC
Remember
Meetings
ROL essentials
By connecting your individual ROL drivers to the marketing ROL drivers, you're ahead of the game. Only 36% of US leaders work with this level of connection.
MARKETING
ME
INDIGGO, LLC
Collective ROL
Beta
Status quo
42
80
Target
ROL fundamentals
87
Strategic clarity
63
Leadership alignment
41
68

FIG. 25

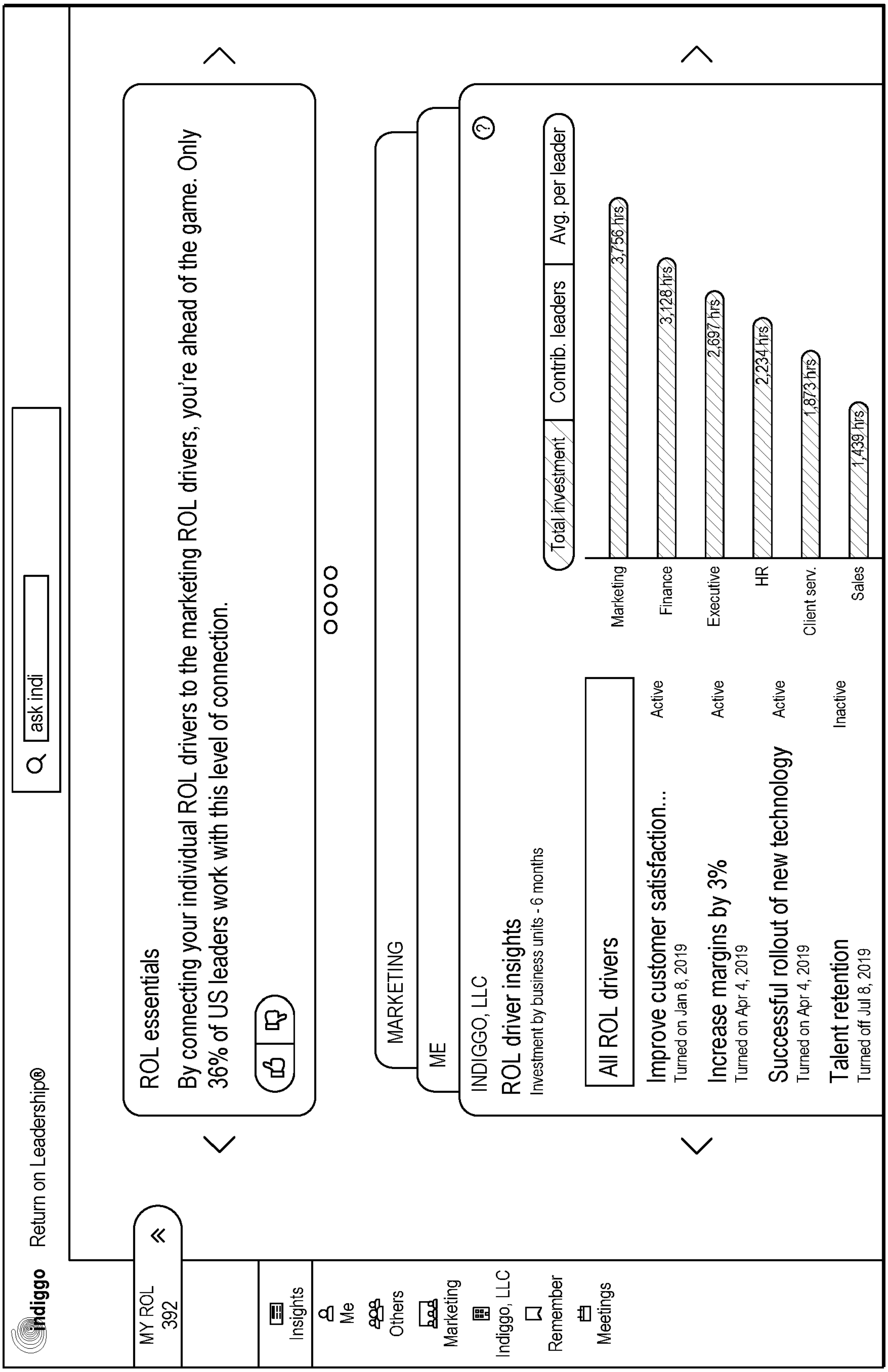

Indiggo
Return on Leadership®
ask indi
MY ROL
392
Insights
Me
Others
Marketing
Indiggo, LLC
Remember
Meetings
ROL essentials
By connecting your individual ROL drivers to the marketing ROL drivers, you're ahead of the game. Only 36% of US leaders work with this level of connection.
MARKETING
ME
INDIGGO, LLC
ROL driver insights
Investment by business units - 6 months
All ROL drivers
Improve customer satisfaction...
Turned on Jan 8, 2019
Active
Increase margins by 3%
Turned on Apr 4, 2019
Active
Successful rollout of new technology
Turned on Apr 4, 2019
Active
Talent retention
Turned off Jul 8, 2019
Inactive
Total investment
Contrib. leaders
Avg. per leader
Marketing
3,756 hrs
Finance
3,128 hrs
Executive
2,697 hrs
HR
2,234 hrs
Client serv.
1,873 hrs
Sales
1,439 hrs


FIG. 26

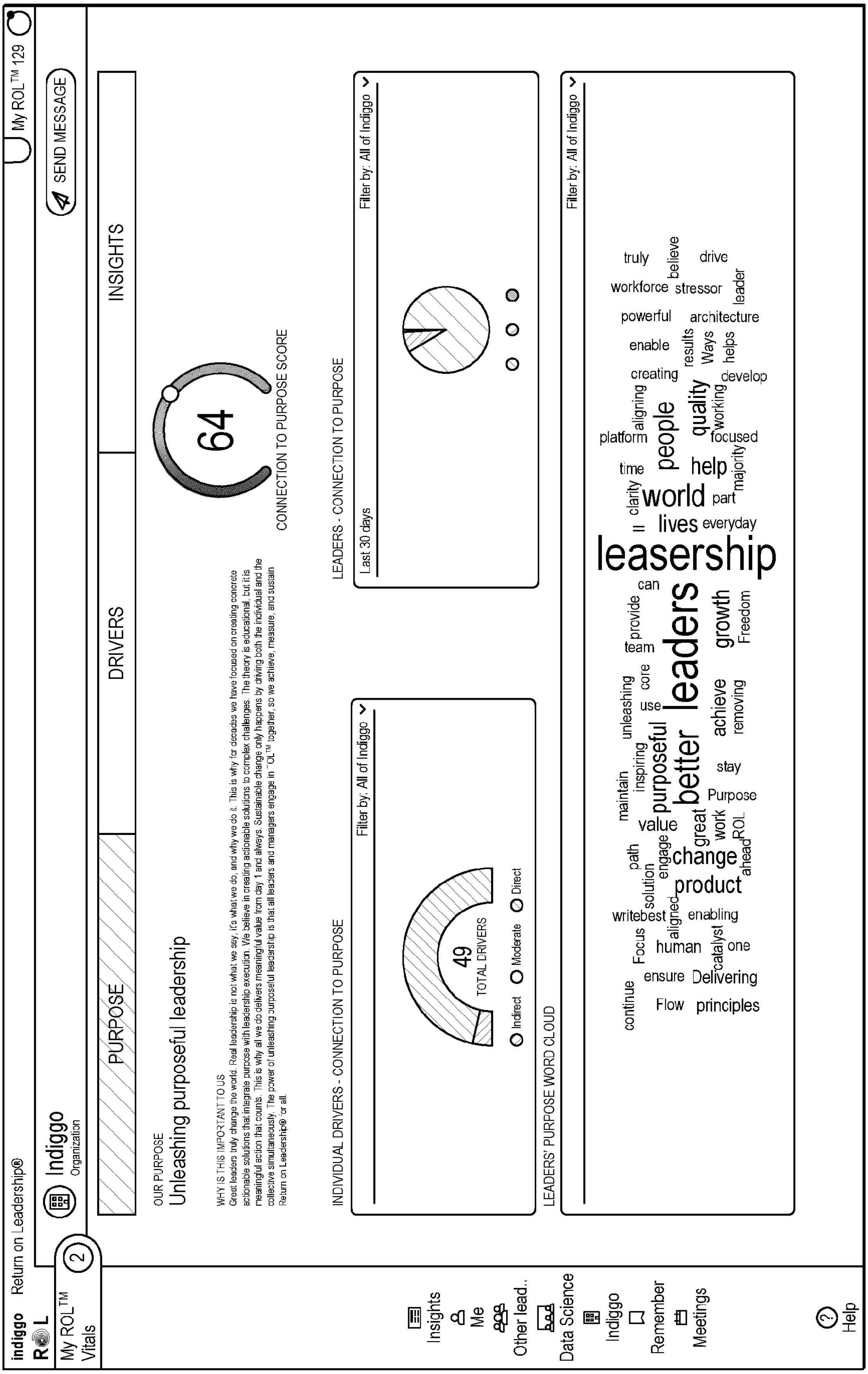
indiggo Return on Leadership®
R L
My ROL™ 129
SEND MESSAGE
My ROL™
Vitals
2
Indiggo
Organization
PURPOSE
DRIVERS
INSIGHTS
OUR PURPOSE
Unleashing purposeful leadership
WHY IS THIS IMPORTANT TO US
64
CONNECTION TO PURPOSE SCORE
INDIVIDUAL DRIVERS - CONNECTION TO PURPOSE
Filter by: All of Indiggo
49
TOTAL DRIVERS
Indirect
Moderate
Direct
LEADERS - CONNECTION TO PURPOSE
Last 30 days
Filter by: All of Indiggo
LEADERS' PURPOSE WORD CLOUD
Filter by: All of Indiggo
leasership
leaders
better
world
people
quality
help
lives
purposeful
change
product
growth
achieve
Insights
Me
Other lead..
Data Science
Indiggo
Remember
Meetings
Help

FIG. 27

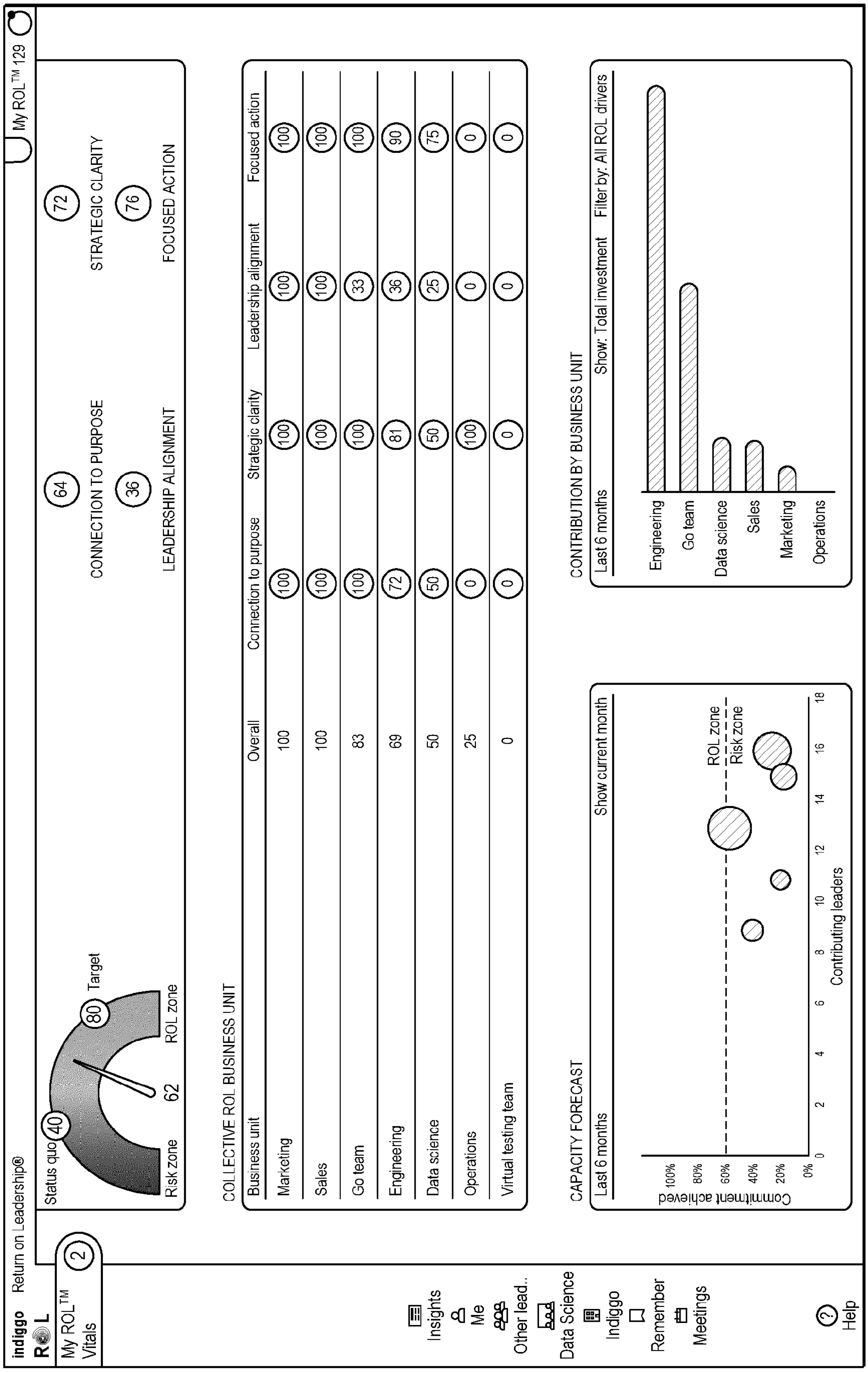
indiggo Return on Leadership®
R L
My ROL™ Vitals
2
My ROL™ 129
Insights
Me
Other lead..
Data Science
Indiggo
Remember
Meetings
Help
Status quo 40
80 Target
Risk zone 62 ROL zone
64 CONNECTION TO PURPOSE
72 STRATEGIC CLARITY
36 LEADERSHIP ALIGNMENT
76 FOCUSED ACTION
COLLECTIVE ROL BUSINESS UNIT
Business unit | Overall | Connection to purpose | Strategic clarity | Leadership alignment | Focused action
Marketing | 100 | 100 | 100 | 100 | 100
Sales | 100 | 100 | 100 | 100 | 100
Go team | 83 | 100 | 100 | 33 | 100
Engineering | 69 | 72 | 81 | 36 | 90
Data science | 50 | 50 | 50 | 25 | 75
Operations | 25 | 0 | 100 | 0 | 0
Virtual testing team | 0 | 0 | 0 | 0 | 0
CAPACITY FORECAST
Last 6 months
Show current month
Commitment achieved
100% 80% 60% 40% 20% 0%
0 2 4 6 8 10 12 14 16 18
Contributing leaders
ROL zone
Risk zone
CONTRIBUTION BY BUSINESS UNIT
Last 6 months
Show: Total investment
Filter by: All ROL drivers
Engineering
Go team
Data science
Sales
Marketing
Operations

FIG. 28

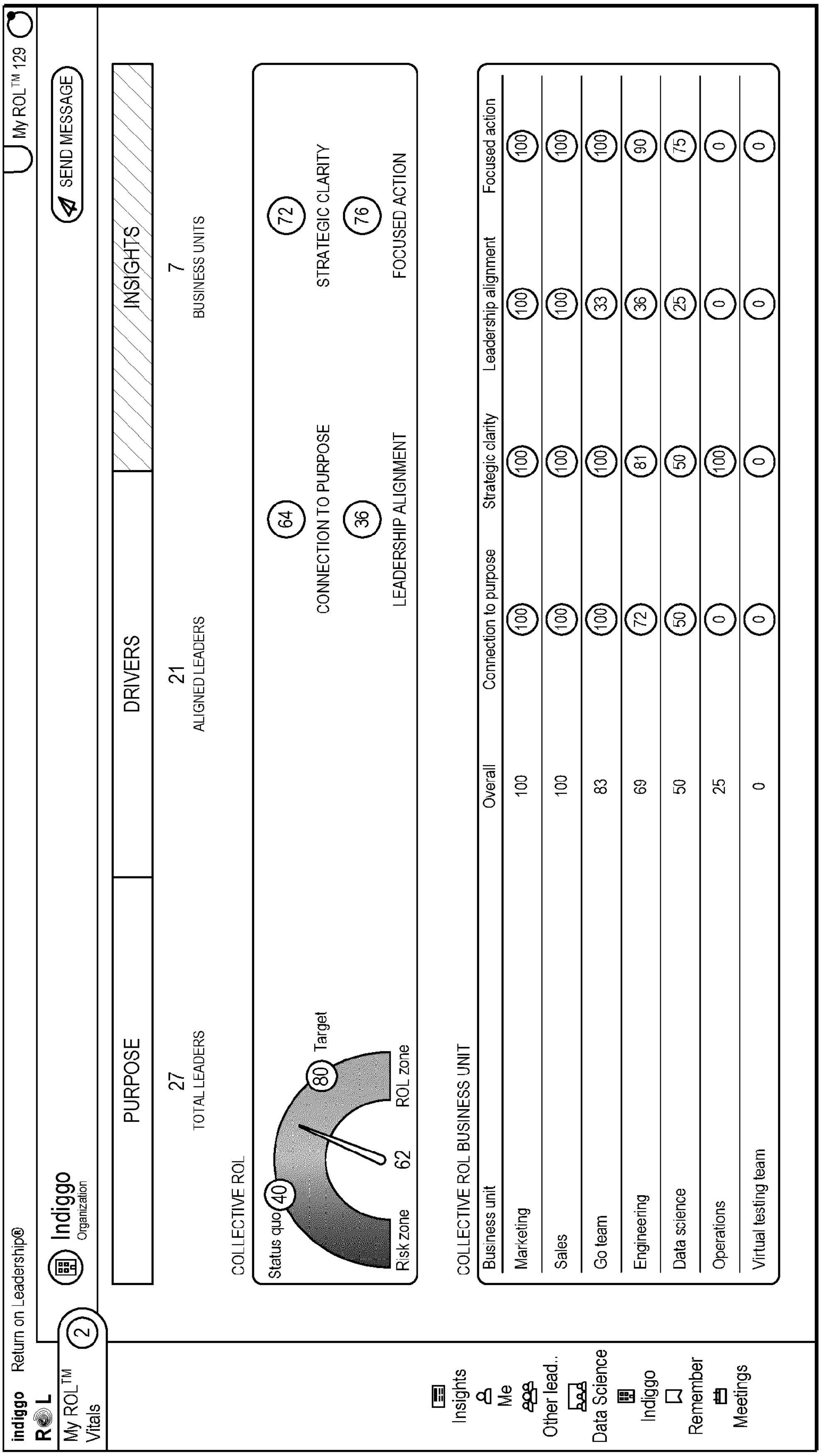
indiggo Return on Leadership®
ROL
My ROL™ 129
My ROL™ Vitals
2
Indiggo
Organization
SEND MESSAGE
PURPOSE
DRIVERS
INSIGHTS
27
TOTAL LEADERS
21
ALIGNED LEADERS
7
BUSINESS UNITS
COLLECTIVE ROL
Status quo
40
80
Target
Risk zone
62
ROL zone
64
CONNECTION TO PURPOSE
72
STRATEGIC CLARITY
36
LEADERSHIP ALIGNMENT
76
FOCUSED ACTION
COLLECTIVE ROL BUSINESS UNIT
Business unit
Overall
Connection to purpose
Strategic clarity
Leadership alignment
Focused action
Marketing 100 100 100 100 100
Sales 100 100 100 100 100
Go team 83 100 100 33 100
Engineering 69 72 81 36 90
Data science 50 50 50 25 75
Operations 25 0 100 0 0
Virtual testing team 0 0 0 0 0
Insights
Me
Other lead..
Data Science
Indiggo
Remember
Meetings

FIG. 29

Europäisches Patentamt
European Patent Office
Office européen des brevets

# EUROPEAN SEARCH REPORT

Application Number
EP 21 21 2554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2016/260044 A1 (SABET MONA [US] ET AL) 8 September 2016 (2016-09-08)<br>* abstract; figures 3-4, 10, 12-13 *<br>* paragraph [0021] - paragraph [0024] *<br>* paragraph [0084] - paragraph [0087] *<br>* paragraph [0101] - paragraph [0106] *<br>* paragraph [0130] *<br>* paragraph [0138] *<br>* paragraph [0145] - paragraph [0148] *<br>* paragraphs [0223], [0230] *<br>----- | 1-5,8-15<br>6,7 | INV.<br>G06F16/9035<br>G06F16/9038 |
| Y<br>A | US 2019/034494 A1 (BRADLEY NATHANIEL T [US] ET AL) 31 January 2019 (2019-01-31)<br>* paragraph [0258] - paragraph [0260] *<br>* figure 5 *<br>----- | 6,7<br>1-5,8-15 | |
| A | US 2014/247150 A1 (PROUD JAMES [US]) 4 September 2014 (2014-09-04)<br>* paragraph [0246] - paragraph [0252] *<br>----- | 1-15 | |
| A | US 2015/347987 A1 (ALI ZAINUL ABEDIN [US]) 3 December 2015 (2015-12-03)<br>* abstract; figure 1 *<br>* paragraph [0206] - paragraph [0210] *<br>----- | 1-15 | TECHNICAL FIELDS SEARCHED (IPC)<br>G06F |

1 The present search report has been drawn up for all claims

| Place of search | Date of completion of the search | Examiner |
|---|---|---|
| Berlin | 14 March 2022 | Nazzaro, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 21 21 2554

This annex lists the patent family members relating to the patent documents cited in the above-mentioned European search report. The members are as contained in the European Patent Office EDP file on
The European Patent Office is in no way liable for these particulars which are merely given for the purpose of information.

14-03-2022

| Patent document cited in search report | Publication date | Patent family member(s) | Publication date |
|---|---|---|---|
| US 2016260044 A1 | 08-09-2016 | NONE | |
| US 2019034494 A1 | 31-01-2019 | US 2019034494 A1 | 31-01-2019 |
| | | US 2022037013 A1 | 03-02-2022 |
| US 2014247150 A1 | 04-09-2014 | NONE | |
| US 2015347987 A1 | 03-12-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63121671
- US 10255700 B